(19) Europäisches Patentamt
European Patent Office
Office européen des brevets

(11) **EP 2 469 870 A2**

(12) **EUROPEAN PATENT APPLICATION**

(43) Date of publication:
**27.06.2012 Bulletin 2012/26**

(51) Int Cl.:
**H04N 13/00** *(2006.01)*

(21) Application number: **11193410.5**

(22) Date of filing: **14.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.12.2010 JP 2010290194**

(71) Applicant: **Sony Corporation**
**Tokyo 108-0075 (JP)**

(72) Inventor: **Gomi, Keizo**
**Tokyo, 108-0075 (JP)**

(74) Representative: **Beder, Jens**
**Mitscherlich & Partner**
**Sonnenstraße 33**
**80331 München (DE)**

(54) **Image processing device, image processing method, and program**

(57)    An image processing device including an image input unit that inputs a two-dimensional image signal; a depth information output unit that inputs or generates depth information; a depth information reliability output unit that inputs or generates the reliability of depth information that the depth information output unit outputs; an image conversion unit that inputs an image signal, depth information, and depth information reliability, and gener-
ates and outputs a left eye image and a right eye image for realizing binocular stereoscopic vision; and an image output unit that outputs a left eye image and a right eye image, wherein the image conversion unit has a configuration of performing image generation of at least one of a left eye image and a right eye image and executes a conversion process in which the depth information and the depth information reliability are applied as conversion control data during the image conversion.

FIG. 1

EP 2 469 870 A2

**Description**

BACKGROUND

The present disclosure relates to an image processing device, an image processing method, and a program, and particularly relates to an image processing device that executes image conversion with respect to a two-dimensional image and generates a binocular parallax image that is compatible with stereoscopic vision.

Various proposals have been made in the related art with regard to a device and method of converting a two-dimensional image into a binocular parallax image that is compatible with stereoscopic vision. A binocular parallax image that is generated based on a two-dimensional image is configured by a pair of a left eye image for observing by the left eye and a right eye image for observing with the right eye. By displaying a binocular parallax image that is configured by such a pair of the left eye image and the right eye image on a display device that is able to respectively separate the left eye image and the right eye image so as to be presented to the left eye and the right eye of an observer, the user is able to perceive the image as a stereoscopic image.

Techniques of the related art disclosed in relation to the generation or displaying process of such as image are able to be categorized, for example, into the below categories based on the techniques thereof.

(A) Technique of generating a three-dimensional image from a plurality of two-dimensional images in the time axis direction

(a1) Technique of imaging two or more images in the time axis direction and substituting the left and right pair with two of the images

(a2) Technique of imaging two or more images in the time axis direction and rendering by performing separation of the background and the main subject or the like by ascertaining the motion vector of an object within an image and estimating the relative position using the fact that the further forward an object is, the faster the movement thereof and the greater the distance moved appears to be or the like

(B) Technique of generating a three-dimensional image from a single two-dimensional image

(b1) Technique of shifting one image in the horizontal direction by a predetermined amount and giving the impression of the image coming out in order to generate a left-right image

(b2) Technique of rendering by performing composition (scene) analysis for only one image by the edge, color, brightness, histogram, or the like, and estimating the depth

(b3) Technique of rendering by extracting a left-right parallax component from only one image using the frequency component, the edge component, or the like

(C) Technique of generating a three-dimensional image from the depth information of a two-dimensional image

(c1) Technique of obtaining the depth information, in addition to one image, by a method of using a range sensor or operating from a plurality of images with different foci and space geometrically rendering by the depth information using mainly the two-dimensional image

(c2) Technique of obtaining the depth information, in addition to one image, by a method of using a range sensor or operating from a plurality of images with different foci and generating a three-dimensional image mainly by the method of generating a three-dimensional image from a single two-dimensional image described above and using the depth information only as an aid

As techniques of generating a three-dimensional image from a two-dimensional image, techniques proposed in the related art are categorized, for example, as above.

(a1) Technique of imaging two or more images in the time axis direction and substituting the left and right pair with two of the images

Japanese Unexamined Patent Application Publication No. 9-107562, for example, describes the above technique. Japanese Unexamined Patent Application Publication No. 9-107562 discloses an image processing configuration of a moving image with movements in the horizontal direction. Specifically, Japanese Unexamined Patent Application Publication No. 9-107562 discloses a configuration of outputting an original image to one of the left eye image and the right eye image and outputting an image that has been delayed by field units to the other. By such an image output control, an object that moves horizontally is perceived to be further forward than the background.

(a2) Technique of imaging two or more images in the time axis direction and rendering by performing separation of the background and the main subject or the like by ascertaining the motion vector of an object within an image and estimating the relative position using the fact that the further forward an object is, the faster the movement thereof and the greater the distance moved appears to be or the like

Japanese Unexamined Patent Application Publication No. 2000-261828, Japanese Unexamined Patent Application Publication No. 9-161074, and Japanese Unexamined Patent Application Publication No. 8-331607, for example, describe the above technique. Such patent literature documents disclose a method of generating a left-right parallax image by estimating the depth using a technique such as block matching from a plurality of images in a time axis.

(b1) Technique of shifting one image in the horizontal direction by a predetermined amount and giving the impression of the image coming out in order to generate a left-right image

Japanese Unexamined Patent Application Publication No. 8-30806, for example, described the above technique. Japanese Unexamined Patent Application Publication No. 8-30806 proposes a device that gives the impression of an image coming out by shifting the left eye image and the right eye image by only a predetermined amount in the horizontal direction for a still image or an image with little movement.

Further, the item (b1) described above and

(b2) Technique of rendering by performing composition (scene) analysis for only one image by the edge, color, brightness, histogram, or the like, and estimating the depth

Japanese Unexamined Patent Application Publication No. 10-51812 is a technique of the related art that discloses the above techniques. Japanese Unexamined Patent Application Publication No. 10-51812 proposes a method of separating an image into a plurality of parallax calculation regions, calculating a pseudo depth from the feature amount of the image in each region, and horizontally shifting the left eye image and the right eye image based on the depth.

Further, Japanese Unexamined Patent Application Publication No. 2005-151534 also describes the technique of the above item (b2). Japanese Unexamined Patent Application Publication No. 2005-151534 proposes a configuration of fitting the structure of an image in a relatively simple limited structure (composition) model and discloses a configuration of suppressing the occurrence of unnatural depth.

Furthermore, Japanese Unexamined Patent Application Publication No. 2010-63083 discloses (b3) technique of rendering by extracting a left-right parallax component from only one image using the frequency component, the edge component, or the like. Japanese Unexamined Patent Application Publication No. 2010-63083 proposes a method of generating a left-right parallax image by adding or subtracting a differential signal to or from an original image.

Further, Japanese Unexamined Patent Application Publication No. 2009-296272 describes (c1) technique of obtaining the depth information, in addition to one image, by a method of using a range sensor or operating from a plurality of images with different foci and space geometrically rendering by the depth information using mainly the two-dimensional image. Japanese Unexamined Patent Application Publication No. 2009-296272 proposes a method of obtaining three-dimensional image data by obtaining the depth information using a range sensor.

SUMMARY

As described above, various techniques have been proposed as techniques of generating a three-dimensional image from a two-dimensional image. However, there are, for example, the below problems with the techniques that have been proposed thus far.

With the technique of (a1) described above, with regard to a still image or an image with little movement, the whole of the screen is shifted, and the relative positions of objects within the image are not represented.

With the technique of (a2), with regard to a still image or an image with little movement, the motion vector is not ascertained, the relative positions of objects within the image are not correctly estimated, and the correct parallax is not imparted.

In the technique (b1), with regard to a still image or an image with little movement, the whole of the screen is shifted, and the relative positions of objects within the image are not represented.

With the technique of (b2), although a pseudo depth is estimated from the feature amount of an image, the estimation is based on the assumption that an object toward the front of the screen has greater sharpness, greater brightness, greater saturation, and the like, and the correct estimation is not necessarily performed. Further, it is difficult to detect a detailed depth from one image, and it is not easy to perform an estimation of the depth of portions that are not the composition, for example, minute details such as branches of trees, electric cables, and hair. An erroneous parallax is therefore imparted on portions for which the depth estimation has been erroneous. Further, since not all structures (compositions) are covered with limited structures (compositions), there is no intrinsic resolution.

With the technique of (b3), merely the frequency component (particularly high frequency component) within a two-dimensional image is used, there is often little correlation with the actual depth, and an unnatural depth is generated within the image.

With the technique of (c1), an accurate measurement of the depth (distance) for all pixels within an image is difficult (has low accuracy) with existing techniques, and an unnatural parallax is generated with a method using such depth information.

The technique of (c2) is intrinsically the same as the techniques (b1) to (b3) but uses the depth information only as an aid.

Briefly, with a conversion method that does not use the depth information, since only the depth is estimated, a problem in which errors occur in many cases and it is difficult to generate a high-quality left-right parallax image arises.

Further, with existing technical standards, even if a range sensor or the like is used, it is extremely difficult to obtain accurate depth information with the resolution capabilities in units of pixels, and it is difficult to generate a high-quality left-right parallax image by a geometric 2D-3D conversion method that mainly uses such inaccurate depth information.

As described above, in all of a case when generating a left-right parallax image from only a two-dimensional image, a case when generating a left-right parallax image by estimating the depth information from a two-dimensional image, and a case when geometrically generating a left-right parallax image from estimated depth information and a two-dimensional image, there are some technical issues, the image quality is greatly affected by the depth information, and it is difficult to generate a left-right parallax image with a high-quality stereoscopic effect with existing techniques.

That is, with left-right parallax image generation using erroneous depth information, erroneous parallax is imparted in an image to be generated, irreconcilable parallax may be imparted or portions in which perspective is deviated from reality (that is erroneous) occur, and the image appears unnatural and strange when viewed stereoscopically. It has been established that a stereoscopic image using a low-quality left-right parallax image not only feels unnatural and difficult to view comfortably, but also causes eyestrain.

It is desirable to provide an image processing device that realizes the generation and presentation of a high-quality left-right parallax image in which the occurrence of erroneous stereoscopic effect due to errors in the measured or estimated depth information is suppressed, an image processing method, and a program.

According to an embodiment of the present disclosure, there is provided an image processing device including: an image input unit that inputs a two-dimensional image signal; a depth information output unit that inputs or generates depth information in units of an image region that configures the two-dimensional image signal; a depth information reliability output unit that inputs or generates the reliability of depth information that the depth information output unit outputs; an image conversion unit that inputs an image signal that is output from the image input unit, depth information that the depth information output unit outputs, and depth information reliability that the depth information reliability output unit outputs, and generates and outputs a left eye image and a right eye image for realizing binocular stereoscopic vision; and an image output unit that outputs a left eye image and a right eye image that are output from the image conversion unit, wherein the image conversion unit has a configuration of performing image generation of at least one of a left eye image and a right eye image by an image conversion process on an input image signal and executes a conversion process in which the depth information and the depth information reliability are applied as conversion control data during the image conversion.

Furthermore, according to the embodiment of an image processing device of the present disclosure, the image conversion unit may execute, in a case when the depth information reliability is equal to or greater than a threshold value fixed in advance and it is determined that the reliability is high, a process of generating a left eye image or a right eye image from a two-dimensional image by an image conversion process on which the depth information has been mainly applied.

Furthermore, according to the embodiment of an image processing device of the present disclosure, the image conversion unit may execute, in a case when the depth information reliability is less than a threshold value fixed in advance and it is determined that reliability is low, a process of generating a left eye image or a right eye image from a two-dimensional image by an image conversion process that does not use the depth information.

Furthermore, according to the embodiment of an image processing device of the present disclosure, the image conversion unit may perform a process of setting a brightness differential signal with respect to an input image signal as a feature amount, generating a signal in which the feature amount is added to an input image signal and a signal in which the feature amount is subtracted from an input image signal, and generating a pair of the two signals as a pair of a left eye image and a right eye image.

Furthermore, according to the embodiment of an image processing device of the present disclosure, the image conversion unit may execute, in a case when the depth information reliability is less than a first threshold value and equal to or greater than a second threshold value fixed in advance and it is determined that the reliability is medium, a process of generating a left eye image or a right eye image from an input two-dimensional image by a non-geometric image conversion process on which the depth information is used as an aid.

Furthermore, according to the embodiment of an image processing device of the present disclosure, the image conversion unit may include: a parallax emphasis component calculation unit that extracts a spatial feature amount of an input image signal and calculates a parallax emphasis component to which an extracted feature amount is applied;

a component amount control unit that executes an adjustment of the parallax emphasis component based on the depth information and the depth information reliability; and a parallax image generation unit that executes a process of generating a left eye image or a right eye image from an input two-dimensional image by an image conversion process on an input image to which a parallax emphasis component for which a component amount that is an output of the component amount control unit is adjusted is applied.

Furthermore, according to the embodiment of an image processing device of the present disclosure, the image conversion unit may include: a depth control unit that executes weighting of the depth information based on the depth information reliability and generates weighting set depth information and a parallax image generation unit that executes a process of generating a left eye image or a right eye image from an input two-dimensional image by an image conversion process on an input image to which weighting set depth information that is an output of the depth control unit is applied.

Furthermore, according to the embodiment of an image processing device of the present disclosure, the image processing device may further include a display unit that displays a converted image that is generated by the image conversion unit.

Furthermore, according to the embodiment of an image processing device of the present disclosure, the image processing device may further include an imaging unit, and the image conversion unit executes a process by inputting an imaged image of the imaging unit.

Furthermore, according to the embodiment of an image processing device of the present disclosure, the image processing device may further include a storage unit that records a converted image that is generated by the image conversion unit.

Furthermore, according to another embodiment of the present disclosure, there is provided an image processing method that executes an image conversion process in an image processing device, the image processing method including: image inputting by an image input unit inputting a two-dimensional image signal; depth information outputting by a depth information output unit inputting or generating depth information in units of an image region that configures the two-dimensional image signal; depth information reliability outputting by a depth information reliability output unit inputting or generating the reliability of depth information that the depth information output unit outputs; image converting by an image conversion unit inputting an image signal that is output from the image input unit, depth information that the depth information output unit outputs, and depth information reliability that the depth information reliability output unit outputs, and generating and outputting a left eye image and a right eye image for realizing binocular stereoscopic vision; and image outputting by an image output unit outputting a left eye image and a right eye image that are output from the image conversion unit, wherein the image converting performs image generation of at least one of a left eye image and a right eye image by an image conversion process on an input image signal and executes a conversion process in which the depth information and the depth information reliability are applied as conversion control data during the image conversion.

Furthermore, according to still another embodiment of the present disclosure, there is provided a program causing an image processing device to execute an image conversion process including: image inputting by an image input unit inputting a two-dimensional image signal; depth information outputting by a depth information output unit inputting or generating depth information in units of an image region that configures the two-dimensional image signal; depth information reliability outputting by a depth information reliability output unit inputting or generating the reliability of depth information that the depth information output unit outputs; image converting by an image conversion unit inputting an image signal that is output from the image input unit, depth information that the depth information output unit outputs, and depth information reliability that the depth information reliability output unit outputs, and generating and outputting a left eye image and a right eye image for realizing binocular stereoscopic vision; and image outputting by an image output unit outputting a left eye image and a right eye image that are output from the image conversion unit, wherein in the image converting, an image generation of at least one of a left eye image and a right eye image by an image conversion process on an input image signal is caused to be performed and a conversion process in which the depth information and the depth information reliability are applied as conversion control data is caused to be executed during the image conversion.

Here, the program of the embodiment of the present disclosure is a program that is able to be provided to, for example, a general-purpose system that is able to execute various program codes by a storage medium or a communication medium that is provided in a computer-readable format. By providing such a program in a computer-readable format, processes according to the program are realized over a computer system.

Further objects, characteristics, and advantages of the embodiments of the present disclosure will be made clear by the more detailed descriptions based on the embodiments of the present disclosure described later and the attached drawings. Here, in the specification, a system is a logical collection configuration of a plurality of devices, and the devices of each configuration are not necessarily within the same housing.

According to an embodiment configuration of the present disclosure, a configuration of generating an image signal that is stereoscopically viewable by the optimal signal process according to the reliability of the depth information is realized. Specifically, in a configuration of generating a left eye image or a right eye image that is applied to a three-dimensional image display based on a two-dimensional image, depth information in units of a region of an image signal or depth reliability information is input or generated, and control of the image conversion is executed based on such information. The depth information in units of an image region that configures a two-dimensional image signal and the reliability of the depth information are input or generated, and a conversion process state of converting a 2D image into a 3D image based on, for example, such information is changed. Alternatively, control or the like of the application level of a parallax emphasis signal is executed. By such processes, the optimal image conversion according to the depth information and the depth reliability of the two-dimensional image becomes possible.

BRIEF DESCRIPTION OF THE DRAWINGS

Fig. 1 is a diagram that illustrates a configuration example of an image processing device according to an embodiment of the present disclosure;

Fig. 2 is a diagram that illustrates another configuration example of an image processing device according to an embodiment of the present disclosure;

Fig. 3 is a diagram that describes a process that an image processing device according to an embodiment of the present disclosure executes;

Fig. 4 is a diagram that describes one configuration example of an image conversion unit of an image processing device according to an embodiment of the present disclosure;

Fig. 5 is a diagram that describes another configuration example of an image conversion unit of an image processing device according to an embodiment of the present disclosure;

Fig. 6 is a diagram that describes still another configuration example of an image conversion unit of an image processing device according to an embodiment of the present disclosure;

Fig. 7 is a diagram that describes one configuration example of a component amount control unit that is set within an image conversion unit of an image processing device according to an embodiment of the present disclosure;

Fig. 8 is a diagram that describes one configuration example of a depth control unit that is set within an image conversion unit of an image processing device according to an embodiment of the present disclosure;

Fig. 9 is a diagram that illustrates a flowchart that describes a processing sequence that an image processing device according to an embodiment of the present disclosure executes;

Fig. 10 is a diagram that illustrates another flowchart that describes a processing sequence that an image processing device according to an embodiment of the present disclosure executes;

Fig. 11 is a diagram that illustrates still another flowchart that describes a processing sequence that an image processing device according to an embodiment of the present disclosure executes;

Fig. 12 is a diagram that illustrates still another flowchart that describes a processing sequence that an image processing device according to an embodiment of the present disclosure executes;

Fig. 13 is a diagram that illustrates still another flowchart that describes a processing sequence that an image processing device according to an embodiment of the present disclosure executes;

Fig. 14 is a diagram that illustrates a flowchart that describes a processing sequence with respect to a moving image which an image processing device according to an embodiment of the present disclosure executes;

Fig. 15 is a diagram that illustrates another flowchart that describes a processing sequence with respect to a moving image which an image processing device according to an embodiment of the present disclosure executes;

Fig. 16 is a diagram that describes a configuration example of an image processing device according to an embodiment of the present disclosure;

Fig. 17 is a diagram that describes another configuration example of an image processing device according to an embodiment of the present disclosure; and

Fig. 18 is a diagram that describes still another configuration example of an image processing device according to an embodiment of the present disclosure.

DETAILED DESCRIPTION OF EMBODIMENTS

Details of an image processing device, an image processing method, and a program of the embodiments of the present disclosure will be described below with reference to the drawings. Description will be made according to the following items.

1. Configuration Examples of Image Processing Device
2. Processing of Depth Information Output Unit
3. Processing of Depth Information Reliability Output Unit

4. Configuration and Processing of Image Conversion Unit
5. Processing of Component Amount Control Unit
6. Processing of Depth Control Unit
7. Processing of Parallax Image Generation Unit
8. Processing of Geometric Parallax Image Generation Unit
9. Processing Relating to Image Display Device
10. Processing sequence of Image Conversion Unit
11. Processing Sequence of Image Conversion Unit

(Moving Image)

12. Other Embodiments

[1. Configuration Examples of Image Processing Device]

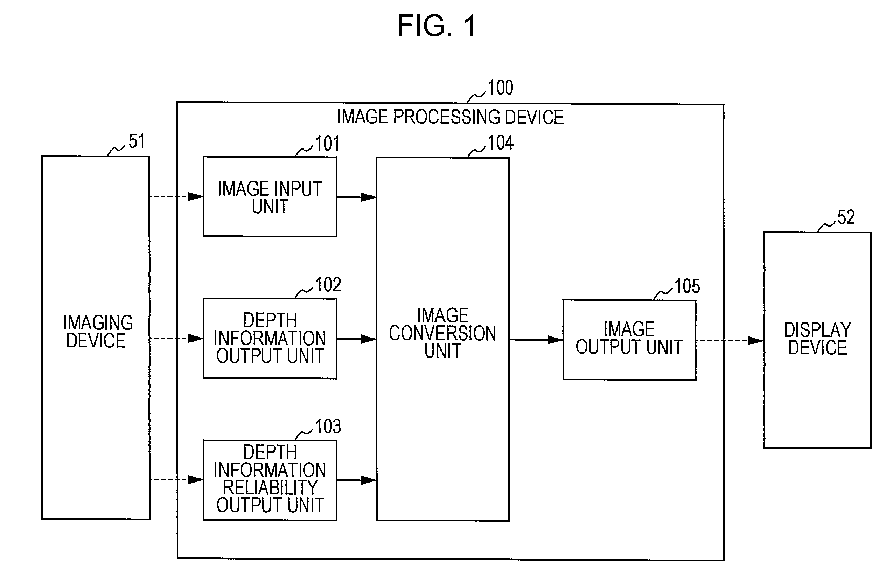

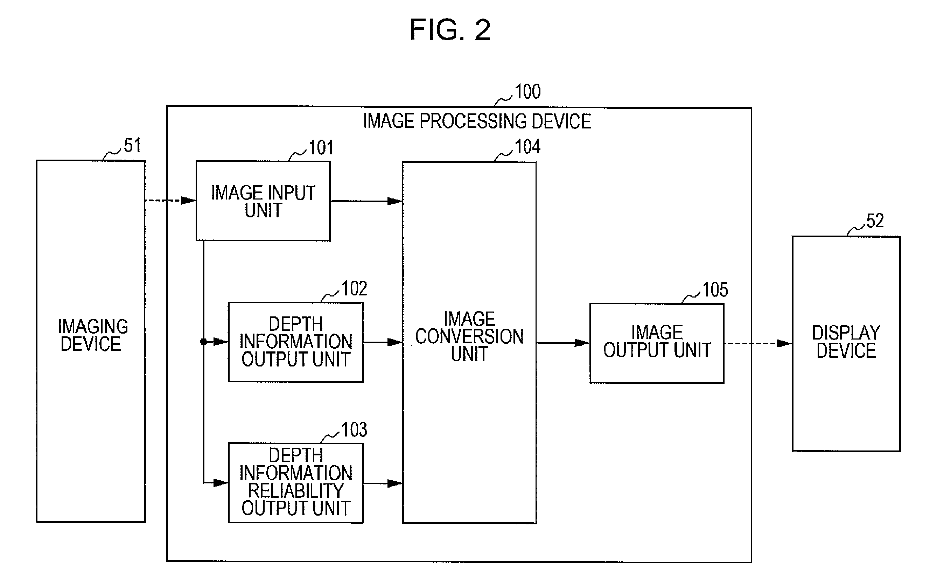

Figs. 1 and 2 are respectively diagrams that illustrate an example of an image processing device of an embodiment of the present disclosure.

As illustrated in Figs. 1 and 2, an imaging device 51 such as a digital camera as an input device that inputs an image to be the processing target of an image processing device 100 is illustrated at an earlier stage of the image processing device 100 of an embodiment of the present disclosure and a display device 52 such as a 3D television as an output device that outputs a processed image of the image processing device 100 is shown at a latter stage.

Such an input device and an output device of an image are not limited to an imaging device and a display device, and a variety of devices such as recording devices such as a magneto-optical memory or a solid-state memory are able to be set. That is, devices that are configured in front and behind the image processing device 100 are not specified as long as such devices have a configuration in which the input and output of information to be used is possible.

Further, the image processing device 100 itself may be configured to be integrated with the imaging device or may be configured to be integrated with the display device such as a 3D television.

The constituent elements of the image processing devices illustrated in Figs. 1 and 2 are the same, and only the connection configurations are different. First, the configuration and processing of the image processing device 100 will be described with reference to Fig. 1.

The image processing device 100 illustrated in Fig. 1 receives still image data or moving image data as a two-dimensional image (2D image) that is output from various types of imaging devices by the image input unit 101 and converts the still image data or the moving image data into an internal data format that is able to be processed by a data processing unit within the image processing device 100. Here, an internal data format is baseband moving image data, and is data of the three primary colors of red (R), green (G), and blue (B), data of the brightness (Y) or the color difference (Cb, Cr), or the like. The internal data format may be any format as long as the data format is able to be processed by an image conversion unit 104 of a latter stage.

A depth information output unit 102 outputs depth information that corresponds to an image signal that is input from the image input unit 101 from the outside or generates the depth information internally and outputs the depth information to the image conversion unit 104. The depth information that the depth information output unit 102 inputs or generates may be information in which it is possible to determine whether the relative positional relationship with an input image signal corresponds and how much depth each pixel has. Details will be described later.

A depth information reliability output unit 103 inputs the depth information reliability that corresponds to the depth information that the depth information output unit 102 outputs from the outside or generates the depth information reliability from the inside and outputs the depth information reliability to the image conversion unit 104. The depth information reliability information 103 may be information in which it is possible to determine whether the relative positional relationship with an input image signal corresponds and how much depth each pixel has. Details will be described later.

The image conversion unit 104 performs a process of converting a two-dimensional image (2D image) that is an input image into a three-dimensional image (3D image) that is applied to a three-dimensional image display by applying a two-dimensional image (2D image) that is input from the image input unit 101, the depth information that is input from the depth information output unit 102, and the reliability information that is input from the depth information reliability output unit 103. Here, such a process is referred to as a 2D-3D conversion in the present specification. The image conversion unit 104 performs a process of performing an image conversion of the two-dimensional image (2D image) that is the input image and generating a left eye image and a right eye image, that is, a binocular parallax image. Details will be described later.

The image data that is output from the image conversion unit 104 is output after being converted into a format that is appropriate for outputting by the image processing unit 105. Resolution conversion or codec conversion such as JPEG and MPEG are examples of the process.

[2. Processing of Depth Information Output Unit]

Next, the processing of the depth information output unit 102 will be described in detail. As described above, the depth information output unit 102 performs a process of outputting by inputting the depth information from the outside or outputting by generating the depth information from the inside.

The depth information that the depth information output unit 102 inputs or generates may be information in which it is possible to determine whether the relative positional relationship with an input image signal corresponds and how much depth each pixel has (for example, distance from the camera). The depth information is, for example, a value that represents from the imaged position to infinity for every pixel in 8 bits (0 to 127). However, the data format is only one example and is not specified.

It is desirable that the number of pixels of the input image and the number of pixels of the depth information be ideally a one to one data setting in which each pixel has depth information. However, even if there is no one to one relationship, the depth information may correspond to blocks composed of a plurality of pixels. Further, a configuration in which depth information is set for a size in which the input image size is reduced, that is, a given area, is also possible. The depth information in units of each of the pixels of an enlarged image as the original image is able to be calculated by applying an appropriate interpolation process based on the depth information that corresponds to each pixel of the reduced image.

Further, in the case of a moving image, the calculation of depth information with a one to one relationship between the input image signals and the frame number is not important. That is, a configuration of using one piece of common depth information in units of a plurality of frames, for example, 2 frames or 4 frames, is also possible.

The obtaining method of the depth information in a case when the depth information is input from the outside is not specified. For example, a method of obtaining the depth information using a range sensor such as a commercially available range scanner, a method of obtaining the depth information by imaging an image using one more camera (two cameras in total) for imaging an image signal and using a stereo method, and further, a method of obtaining the depth information by an operation from a plurality of images with different foci, or the like may be used.

Further, the depth information output unit 102 may generate the depth information on the inside using an input image signal as a two-dimensional image that the image input unit 101 inputs instead of inputting the depth information from the outside of the image processing device 100. As a method of obtaining distance information from a two-dimensional image, the techniques described in the below literature documents are able to be applied. That is, there is the method publicized by A. Saxena et al. in "Make 3D: Learning 3-D Scene Structure from a Single Still Image" (IEEE Transactions on Pattern Analysis and Machine Intelligence (PAMI), 2008.), the method disclosed in Japanese Patent Application Publication No. 2005-151534, and the like.

By using the methods described in such literature documents, the depth information output unit 102 is able to generate depth information using an input image signal as a two-dimensional image and output the depth information to the image conversion unit.

Here, in the case of such a configuration, the image processing device 100 is set as illustrated in Fig. 2. That is, the depth information output unit 102 has a configuration of inputting an image via the image input unit 101, generating the depth information based on the input image, and outputting the generated depth information to the image conversion unit 104.

[3. Processing of Depth Information Reliability Output Unit]

Next, a processing example of the depth information reliability output unit 103 will be described in detail. As described above, the depth information reliability output unit 103 performs a process of outputting the reliability of the depth information (hereinafter referred to as reliability information) by inputting the reliability information from the outside or outputting the reliability information by generating the reliability information on the inside.

The reliability information may be information in which it is possible to determine whether the relative positional relationship with the depth information corresponds and how reliable each pixel is. For example, the reliability information is a value that represents completely reliable (7) to completely unreliable (0) by 3-bit information [(111)=7] to [(000)=0] set for each pixel. However, the data format is only an example and is not specified.

It is desirable that the data correspondence relationship between the reliability information and the depth information also be ideally a one to one corresponding data setting for each piece of depth information. However, there may be no one to one relationship, and there may be a case when the depth information is a reduced size to indicate the respective reliability of areas into which the depth information is divided. Further, there may be a case when there is one piece of reliability information for every pixel. Furthermore, there may also be a case when the reliability information of pixels and areas and the reliability information of one image as a whole are held separately.

Further, in the case of a moving image, the frame numbers of the input image and the depth information may not have a one to one relationship. That is, a configuration of using one piece of common reliability information in units of a plurality of frames, for example, 2 frames or 4 frames, is also possible.

Various settings are possible for the obtaining (generation) method of the reliability information in a case when the reliability information is input from the outside, and the obtaining method is not specified. For example, in a case when inputting the depth information from the outside, the reliability information is generally generated at the same time as when the depth information is generated. In a case when imaging an image, a method of operating or estimating by taking information of the lens position (zoom position), the AF (autofocus), scene estimation of an imaging apparatus, scene setting by the settings, and the like into account, or the like may be used. Here, at the same time is used in a broad sense to mean before inputting to the image processing device 100. In the case of such a configuration, as illustrated in Fig. 1, the image processing device 100 has a configuration in which the reliability information is input from the outside of the image processing device 100. In a case when the format of the depth information that is input from the outside is different from the format used on the inside, the depth information is output by converting the format here.

In a case when estimating the reliability information from the inside instead of outputting from the outside, metadata or the like that is attached to the depth information, the two-dimensional image, and the image is used when estimating. A method of taking the frequency component of the two-dimensional image and the result of composition analysis into account or taking the metadata (imaging conditions such as the zoom position) into account and operating and estimating may be used.

First, an example of a method of estimating the reliability from only the depth information will be described.

(3-1. Estimation Method of Reliability Based on Detection of Outliers)

If each piece of data of the depth information (depth values) is arranged on a plane, there is a case where one pixel is different from the depth values in the surroundings thereof. Although there is a case when only such a pixel has a different depth, it is far more often the case that there is an error in the obtaining or obtaining of the depth information. Accordingly, it is important to treat a piece of data that indicates a different depth value from the surroundings thereof as an outlier and to lower the reliability. An example of such a processing method will be shown.

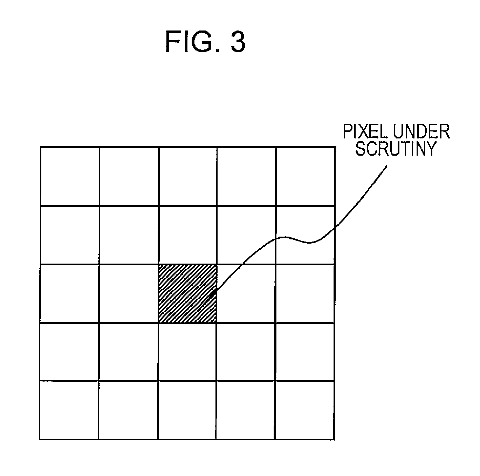

As illustrated in Fig. 3, the depth values of two depth values to the left, right, above, and below a particular pixel (or area) under scrutiny are used. As illustrated in Fig. 3, there are 5x5=25 depth values with the pixel under scrutiny (target coordinates) as the center. The average value of the 24 depth values excluding the central coordinates is ascertained and compared to the depth value of the target coordinates. In a case when the target coordinates are a value that differs by equal to or greater than 5% from the average value, the target coordinates are treated as an outlier, and the reliability of the depth value of the coordinates is lowered by 1 (in the example, reliability is a maximum of 7 and a minimum of 0).

The reliability is assigned by lowering the value of the reliability (7 to 0) by 2 in a case when the difference between the depth value of the pixel under scrutiny (target coordinates) and the average values of the 24 depth values excluding the central coordinates is equal to or greater than 10%, lowering the value of the reliability by 3 in a case when the difference is equal to or greater than 15%, and the like. In a case when the polarities of the distances of the depth values of the target coordinates and the surroundings thereof (positive and negative in a case when further is + and nearer is - when the center distance that the imager intends to image is 0) are direct opposites, the reliability is lowered by 7 at once to the minimum rank of 0.

Further, in a case when the proportion of outliers to the number of depth values that corresponds to the entire screen is equal to or greater than 5%, the reliability of one image is lowered by 1. As the proportion of outliers increases to 10% and 15%, the amount by which the reliability of the one image is lowered is also increased to 2 and 3.

In such a manner, it is possible to estimate the reliability of each depth by an analysis process of the distribution state of outliers.

(3-2. Estimation Method of Reliability by Dynamic Range of Depth Values and the like)

Next, the other method of estimating the reliability from only the depth information will be described.

A case when depth information of 8-bit data in units of pixels or blocks is set as the setting of the depth values will be described. A case when the display surface (just focus position, center distance that the imager intends) is 0, infinity is 127, and the camera position is -128 will be described as an example.

In a case when the difference between the maximum value and the minimum value (dynamic range) of the depth value over the whole of one image is extremely small, it is often the case that there is an error in the depth information. In a case when the difference between the maximum value and the minimum value (dynamic range) of the depth value over the whole of one image is equally to or lower than a fixed threshold value in such a manner, the reliability of the depth information of such an image is set low. Here, even if the depth information that is set in such an image is correct depth information, even if the subject is at virtually the same distance and a three-dimensional image is generated using the depth values, the same sort of image as a two-dimensional image is generated, and there is little point in generating an image for three-dimensional image display.

An example of a processing method of setting the reliability by calculating the difference between the maximum value and the minimum value (dynamic range) of the depth value over the whole of one image will be described. First, the maximum value and the minimum value of the depth values that are set in a processing target image are ascertained. The range of depth values is from 127 (infinity) to -128 (camera position). In a case when the difference between the minimum value and the maximum value is only 50, the value of reliability [completely reliable (7) to completely unreliable (0)] is lowered by 7 to the lowest rank. As the difference increases to 75, 100, and 150, the amount by which the value of reliability if lowered is reduced and the rank is increased. In a case when the reliability of one image is to be made independent, the reliability of pixel is lowered by one rank or the like.

Here, a setting in which a similar process is performed by only the value of the maximum value instead of calculating the difference between the maximum value and the minimum value (dynamic range) is also possible. For example, in a case when the maximum value of the depth values of the processing target image is equal to or less than a fixed threshold value, a process of lowering the reliability is performed. The reason is that the image then does not have sufficient depth on the background side and is not an image that evokes a sufficient stereoscopic effect when a three-dimensional image is generated.

In both a case when the minimum value of the depth values that are set in the processing target image is a positive value and a case when the maximum value is a negative value, it is likely that the depth information is unnatural. In such a case, the reliability of one image is also lowered by 7 to the minimum.

Further, the depth values may not be linear to the distance, but may be non-linear in which the dynamic range in the vicinity of the target distance is broaden, and the range in the background side is broaden.

(3-3. Estimation Method of Reliability Using Two-Dimensional Data and Metadata)

Next, the estimation method of the reliability using two-dimensional image data and metadata will be described.

First, composition analysis of a two-dimensional image to be the processing target is performed. Edge detection and the like are performed, and the subject region and the background region are separated. The average of the depth values of the subject region and the average of the depth values of the background region are ascertained. Here, the vicinity of the borders therebetween is excluded. In the case of a plurality of subjects, the subjects may be averaged individually. In the present example, a case when the depth values are set to 0 for the display surface (just focus position, center distance that the imager intends), 127 for infinity, and -128 for the camera position will be described as an example.

In a case when the difference in the depth values between the subject and the background is not equal to or greater than 50, it is determined that there is insufficient distance difference and the reliability [completely reliable (7) to completely unreliable (0)] of one image is lowered by 7 to the lowest rank.

Further, the threshold values of the techniques using the outliers and the dynamic ranges described above may be changed and made to correspond by ascertaining the maximum value and the minimum value of the depth values of only the respective ranges of the subject region and the background region. For example, with the depth values of a subject portion, since the maximum and minimum values are concentrated around 0 and the dynamic range (difference between the maximum value and the minimum value) is likely to be small, in a case when the dynamic range is greater than 50, the reliability is lowered by 7. Conversely, since the depth values of a background portion is likely not around 0 and is instead a large positive value, in the case of a depth value that is less than +50, for example, the reliability is lowered by 7.

Further, since if there is an error in the determination of the depth value in the vicinity of the borders between the subject and the background, the influence of the error on the pixels stands out, it is safest to perform a process of lowering the reliability by 3 or 4, or to perform a process of lowering the reliability by 7 and setting to completely disregard the depth information.

With the reliability lowering method using the outliers as described above, in a case when it is possible to distinguish portions where the foci match and the portions that are the subject by an analysis of the two-dimensional image, a method of lowering the reliability of the outliers at the subject portion even more by increasing the weighting of the outliers at such portions is also possible.

Here, in a case when a face detection function is included in the imaging device, there is a case when the positional coordinates of a face are recorded as metadata of the imaged image data. In a case when estimating the depth from such an image, specifying the subject distance from the size of the face becomes easy. Since depth information using such face information is highly precise, it is possible to determine that the reliability thereof is high.

Further, if the zoom magnification is recorded in the metadata of the processing target image, the zoom magnification is combined with the face detection result and the precision of composition analysis such as verifying whether or not the proportion of the image taken up by a face in the case of imaging a person is improved. Further, if indoors and outdoors information or the result of scene analysis when imaging (portrait, landscape, night scene, backlight, macro, or the like) which has been included as functions of cameras in recent years is recorded in the metadata, it is possible to make the determination of the composition analysis and the reliability more accurate. By using metadata attached to an image in such a manner, it is possible to estimate the reliability of the depth information.

As described above, the depth information reliability output unit 103 is able to generate reliability information using the input image signal as a two-dimensional image, the depth information, and the like and to output the reliability information to the image conversion unit 104. Here, in a case when executing a reliability calculation based on the input image in such a manner, as illustrated in Fig. 2, in the image processing device 100, the depth information reliability output unit 103 inputs the image via the image input unit 101 or via the depth information output unit 102, or inputs the depth information from the outside and generates the reliability information based on such input data and outputs the generated reliability information to the image conversion unit 104.

[4. Configuration and Processing of Image Conversion Unit]

Next, details of the processes of the image conversion unit 104 of the image processing device 100 illustrated in Figs. 1 and 2 will be described.

(4-1. First Embodiment of Image Conversion Unit)

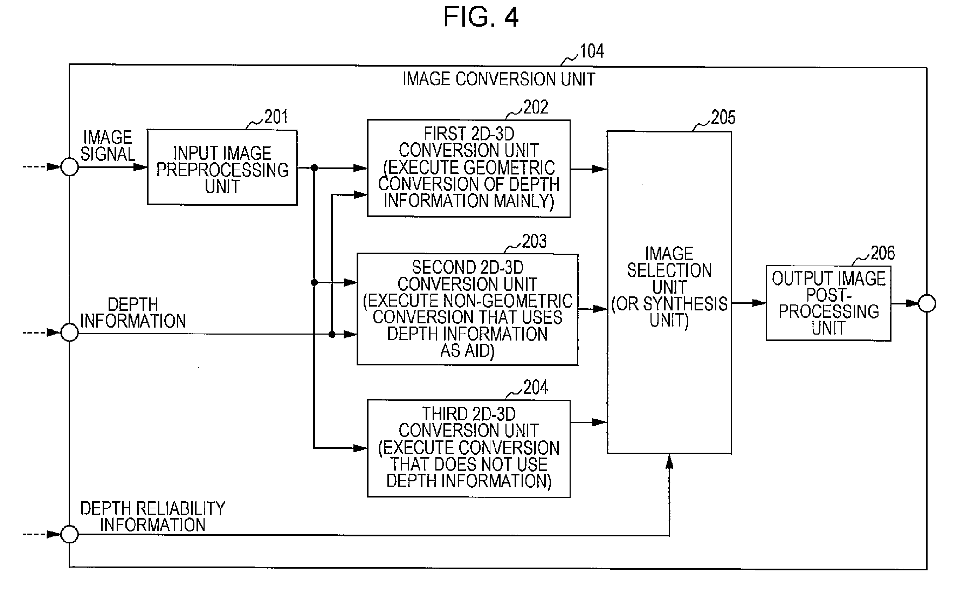

A first embodiment of the image conversion unit 104 will be described with reference to Fig. 4.

The image conversion unit 104 illustrated in Fig. 4 includes first to third 2D-3D conversion units 202 to 204 that execute three types of image conversion methods in parallel.

An output image is generated by selecting or synthesizing any of the converted images of the three first to third 2D-3D conversion units 202 to 204 according to the depth information reliability of the processing target image.

Here, in the embodiments described below, although a setting in which the processing is switched according to the reliability of one entire image to be the processing target image is described, a setting in which the processing is switched in units of pixels or units of blocks according to the reliability of each pixel or in units of blocks composed of a plurality of pixels is also possible.

An input image preprocessing unit 201 inputs an image signal of the processing target image from the image input unit 101 and outputs the image signal to each of the 2D-3D conversion units 202 to 204.

The first 2D-3D conversion unit 202 geometrically operates the two-dimensional image from the depth information mainly using the depth information that the depth information output unit 102 outputs and generates a left-right parallax image composed of a left eye image and a right eye image that are applied to three-dimensional image display. That is, a geometric 2D-3D conversion process based on the depth information is executed.

Since a method that generates a left-right parallax image from a 2D image and depth information geometrically, that is, by coordinate transformation or projection is already common and will not be particularly described, for example, the principles and the conversion method are also described in Japanese Unexamined Patent Application Publication No. 2009-296272 described earlier, and in the first 2D-3D conversion unit 202, a geometric 2D-3D conversion process in which the depth information is mainly applied applying such methods, for example, is executed.

The second 2D-3D conversion unit 203 generates a left-right parallax image composed of a left eye image and a right eye image in which a two-dimensional image that is input as the processing target image is applied to three-dimensional image display using the depth information that the depth information output unit 102 outputs as an aid. That is, a non-geometric conversion that uses the depth information as an aid is executed.

Basically, a left-right parallax image composed of a left eye image and a right eye image in which a two-dimensional image is applied to three-dimensional image display without using the depth information such as a method using composition analysis or a method using the edge component, the frequency component, or the like. For example, a generation method of the left-right parallax image using the frequency component is described in Japanese Unexamined Patent Application Publication No. 2010-63083 described earlier, and in the second 2D-3D conversion unit 203, the left-right parallax image is generated by applying such methods, for example, without using the depth information. Furthermore, the parallax amount or the levels of effects are finely adjusted using the depth information output by the depth information output unit 102.

The third 2D-3D conversion unit 204 generates a left-right parallax image composed of a left eye image and a right eye image in which only a two-dimensional image that is input as the processing target image is applied to a three-dimensional image display without using the depth information that the depth information output unit 102 outputs at all.

Specifically, the method using the composition analysis described above, the method using the edge component, the frequency component, or the like, or the like is applied. The generation method of a left-right parallax image using the frequency component described in Japanese Unexamined Patent Application Publication No. 2010-63083 described earlier may be applied. The third 2D-3D conversion unit 204 executes a 2D-3D conversion process that does not use the depth information by applying such methods, for example.

The left-right parallax image respectively generated by the 2D-3D conversion units 202 to 204 is input to an image selection unit 205. On the other hand, the reliability information of the depth information set by a two-dimensional image as the processing target image is also input to the image selection unit 205 from the depth information reliability output unit 103.

The image selection unit 205 executes selection of an output image by, for example, the below image selection processes according to the reliability information (for example, high reliability 7 to low reliability 0).

If the reliability is 6 or greater, a left-right parallax image by a geometric conversion in which the depth information generated by the first 2D-3D conversion unit 202 is applied is selected.

If the reliability is 2 or less, a left-right parallax image ascertained by a conversion in which the depth information generated by the third 2D-3D conversion unit 204 is not used is selected.

In a case when the reliability is within the range between 6 and 2, a left-right parallax image generated by a non-geometric 2D-3D conversion in which the depth information generated by the second 2D-3D conversion unit 203 is used as an aid is selected.

Here, although an example of selecting the process based on the reliability information of an entire image as the processing target has been described in the processing example described above, a configuration of executing a selection process in units of pixels and blocks that use the reliability in units of pixels and units of blocks, for example, is also possible.

In such a case, the output image is generated by executing a process of weighting and blending the outputs from the first to third 2D-3D conversion units by predetermined proportions for each pixel or in units of blocks according to the reliability of each pixel or in units of blocks.

Further, although an example in which there are three types of processing forms executed by the 2D-3D conversion units has been described in the image conversion unit illustrated in Fig. 4, without limiting to three types, a configuration of selecting the output according to the reliability of the depth information by setting the conversion method to two types or four types or more is also possible.

The image data that is output from the image selection unit 205 is input to an output image post-processing unit 206 and converted into an image data format appropriate to the image output unit of a latter stage. Here, the output image post-processing unit 206 is not an important configuration, and it is possible to omit such a configuration if the image output unit of the latter stage is able to interpret the image data.

(4-2. Second Embodiment of Image Conversion Unit)

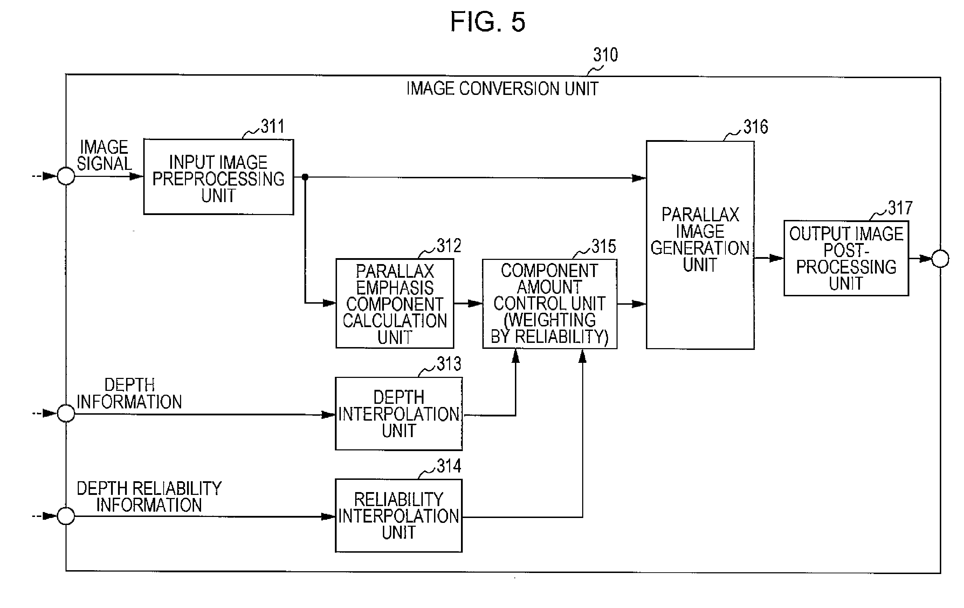

The image conversion unit 104 described with reference to Fig. 4 executes a process of selecting or synthesizing images that are generated by different 2D-3D conversion processes according to the reliability of the depth information. The configuration of the image conversion unit is not limited to the configuration illustrated in Fig. 4, and may be, for example, the configuration illustrated in Fig. 5.

Fig. 5 is a block diagram that illustrates the other embodiment of the image conversion unit of an embodiment of the present disclosure. With the configuration of the image conversion unit 104 of Fig. 4 described earlier, three different types of image conversion methods were completely independent and in parallel, and were set to switch the processing according to the depth information reliability of the entire image, for example.

Unlike the processing configuration illustrated in Fig. 4, an image conversion unit 310 illustrated in Fig. 5 does not perform different 2D-3D conversion processes in parallel. The image conversion unit 310 illustrated in Fig. 5 extracts a spatial feature amount (parallax emphasis component) of a two-dimensional image as the processing target and generates a left eye image (L image) and a right eye image (R image) that are applied to a three-dimensional image display using the parallax emphasis component.

That is, the image conversion unit 310 generates L and R images by a process of performing difference emphasis processes in which the parallax emphasis component is applied to the input two-dimensional image. Here, there is a description in Japanese Unexamined Patent Application Publication No. 2010-63083, for example, regarding the L and R image generation processes in which such a parallax emphasis component is applied. The process described in Japanese Unexamined Patent Application Publication No. 2010-63083 will be described briefly. First, a signal in which the input image signal of the two-dimensional image that is the processing target is differentiated is extracted as a parallax emphasis component. That is, the image data that is input to the image conversion unit is separated into a brightness signal and a chroma signal, and differential signals (H) with respect to each of the brightness and chroma signals are generated. Specifically, a signal in which the input signal is first differentiated is generated by inputting the chroma signal horizontally. The first differentiating process uses, for example, a linear first differentiated filter with three taps in the horizontal direction or the like. The differentiated signal (H) is then converted non-linearly and a final parallax emphasis signal (E) is obtained.

Each of the image signals R and L of the R image and the L image as the left-right parallax image are generated by the below expressions using the parallax emphasis signal (E) and an original input image signal (S).

$$R = S - E$$

$$L = S + E$$

The L image and R image that are applied to the three-dimensional image display are generated by adding or subtracting the parallax emphasis signal (E) to or from the original image signal.

The processes of the image conversion unit 310 illustrated in Fig. 5 will be described.

An input image preprocessing unit 311 outputs the input image signal from the image input unit 101 to a parallax emphasis component calculation unit 312.

The parallax emphasis component calculation unit 312 extracts a parallax emphasis component for generating a left-right parallax image and outputs the parallax emphasis component to a component amount control unit 315. As described above, in a case when the configuration described in Japanese Unexamined Patent Application Publication No. 2010-63083 is applied, for example, the parallax emphasis component is the differential signal (H) of the image signal. A configuration of using other component information is also possible.

The component amount control unit 315 inputs the parallax emphasis component in units of processed pixels to the processing target image and finely adjusts the input parallax emphasis component amount. In a case when applying the method described in Japanese Unexamined Patent Application Publication No. 2010-63083, the component amount control unit 315 non-linearly converts the differential signal (H) and performs a process of calculating the final parallax emphasis signal (E).

A parallax image generation unit 316 then generates a left eye image (L image) and a right eye image (R image) as a left-right parallax image.

A depth interpolation unit 313 of the image conversion unit 310 illustrated in Fig. 5 inputs the depth information that the depth information output unit 102 outputs. The depth interpolation unit 313 sets the depth information that the depth information output unit 102 outputs as the information corresponding to each of the pixels of a two-dimensional image as the processing target image. In a case when there is no one to one correspondence with the pixels of the input image, the depth information of each pixel position is calculated by an interpolation method such as, for example, a bicubic method and the depth information is output to the component amount control unit 315.

The component amount control unit 315 executes fine adjustment of the parallax component amount.

For example, in a case when the configuration described in Japanese Unexamined Patent Application Publication No. 2010-63083 is applied, each of the image signals R and L of the R image and the L image as the left-right parallax image are generated by the below expressions using the parallax emphasis signal (E) and the original input image signal (S).

$$R = S - E$$

$$R = S + E$$

The component amount control unit 315 executes an adjustment of setting E to be large when setting a large parallax and setting E to be small when setting a small parallax based on the depth information of each of the pixels.

Fine adjustment of the parallax component amount is executed by such an adjustment process.

That is, if the size of the parallax emphasis signal (E) is changed according to the depth value, fine adjustment of the parallax amount becomes possible. That is, the size of the parallax emphasis signal (E) is changed by controlling the amplitude value of the differential signal by multiplying a coefficient (gain coefficient) that follows regulations set in advance to the differential signal (H) before the non-linear conversion and generating a compensated differential signal (H') that is a compensated signal of the differential signal. The final parallax emphasis signal (E) is obtained by non-linearly converting the compensated differential signal (H').

Here, although the above processing example is a processing example in a case when the configuration described in Japanese Unexamined Patent Application Publication No. 2010-63083 is applied, even in the case of other methods, fine adjustment of the parallax amount is possible by a method of applying a gain corresponding to the depth value to a parallax component amount (feature amount) extracted from a 2D image by the component amount control unit.

In the embodiments of the present disclosure, a process that takes the reliability information of the depth information that is obtained or calculated which corresponds to the processing target image into consideration is further performed.

The reliability information that is output from the depth information reliability output unit 103 is input to a reliability interpolation unit 314. The reliability interpolation unit 314 performs a process of turning the reliability information into information that is one to one with the depth information that corresponds to each pixel. The reliability information of each pixel position is calculated by an interpolation method such as, for example the bicubic method.

The reliability information that corresponds to each of the pixels is output to the component amount control unit 315. The component amount control unit 315 sets the gain amount that the parallax component amount is multiplied by based on the reliability information. The gain amount 0 in a case when the depth value is not reliable to the gain amount 1 in a case when the depth value is reliable is set. If the parallax component amount is multiplied by the gain value, the component amount control unit 315 is able to avoid generating an unnecessary parallax component by reducing the parallax emphasis amount in a case when the depth is unreliable.

That is, in a case when the configuration described in Japanese Unexamined Patent Application Publication No. 2010-63083 is applied, fine adjustment of the parallax amount is performed by changing the size of the parallax emphasis signal (E) according to the reliability of the depth values. The size of the parallax emphasis signal (E) is changed by controlling the amplitude value of the differential signal by multiplying a coefficient (gain coefficient) that follows regulations set in advance to the differential signal (H) before the non-linear conversion and generating a compensated differential signal (H') that is a compensated signal of the differential signal. The final parallax emphasis signal (E) is obtained by non-linearly converting the compensated differential signal (H').

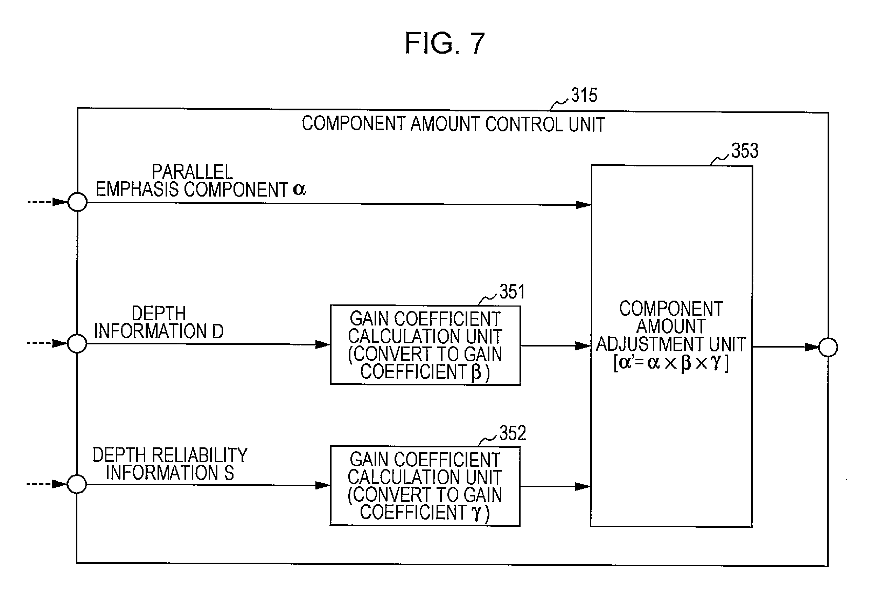

Even in a case when a configuration other than the configuration described in Japanese Unexamined Patent Application Publication No. 2010-63083 is adopted, fine adjustment of the parallax amount in the component amount control unit 315 is possible by a method of multiplying the parallax component amount extracted from the 2D image with a gain that corresponds to the depth values. Here, a configuration example of the component amount control unit 315 will be described later using Fig. 7.

The parallax emphasis component of a pixel that is finally ascertained by the component amount control unit 315 is output to the parallax image generation unit 316. In the parallax image generation unit 316, a left-right parallax image is generated using the two-dimensional image that is output from the input image preprocessing unit 311 and the parallax emphasis component that is input from the component amount control unit 315 and outputs the left-right parallax image to an output image post-processing unit 317.

In a case when the configuration described in Japanese Unexamined Patent Application Publication No. 2010-63083 is applied, the process that the parallax image generation unit 316 executes is a process generating each of the image signals R and L of the R image and the L image as the left-right parallax image by the below expressions using the two-dimensional image signal (S) input from the input image preprocessing unit 311 and the parallax emphasis signal (E) input from the component amount control unit 315.

$$R = S - E$$

$$L = S + E$$

However, here, the parallax emphasis signal (E) is a value that is adjusted according to the reliability of the depth information.

(4-3. Third Embodiment of Image Conversion Unit)

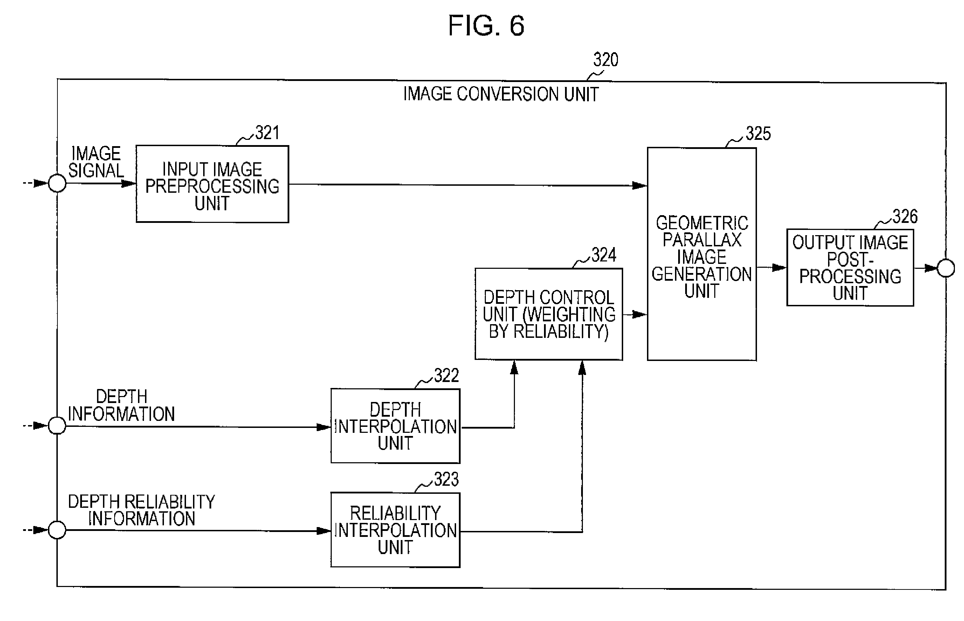

Fig. 6 is a block diagram that illustrates the other embodiment of an image conversion unit according to an embodiment of the present disclosure. Similarly to the image conversion unit described with reference to Fig. 5, unlike the processing configuration illustrated in Fig. 4, an image conversion unit 320 illustrated in Fig. 6 does not perform different 2D-3D conversion processes in parallel.

Although the image conversion unit 310 described with reference to Fig. 5 has a configuration of using the depth information as an aid, the image conversion unit 320 illustrated in Fig. 6 is a configuration example in a case when the depth information is mainly used (when the depth is not estimated from the two-dimensional image).

The processes of the image conversion unit 320 illustrated in Fig. 6 will be described.

A depth interpolation unit 322 of the image conversion unit 320 illustrated in Fig. 6 inputs the depth information that the depth information output unit 102 outputs. The depth interpolation unit 322 sets the depth information that the depth information output unit 102 outputs as information that corresponds to each of the pixels of a two-dimensional image that is the processing target image. In a case when there is no one to one correspondence with the pixels of the input image, the depth information of each pixel position is calculated by an interpolation method such as, for example, a bicubic method and the depth information is output to a depth control unit 324.

The reliability information that is input from the depth information reliability output unit 103 is input to a reliability interpolation unit 323. The reliability interpolation unit 323 performs a process of turning the reliability information into information that is one to one with the depth information that corresponds to each pixel. The reliability information of each pixel position is calculated by an interpolation method such as, for example the bicubic method. The reliability information that corresponds to each of the pixels is output to the depth control unit 324.

The depth control unit 324 inputs each piece of pixel data of the processing target image from the input image preprocessing unit 321 and inputs the depth information and the reliability information that correspond to the processed pixels respectively from the depth interpolation unit 322 and the reliability interpolation unit 323.

The depth control unit 324 increases and decreases the depth (parallax amount) with respect to the input depth information using the reliability information. As an example, supposing that the gain value is 0 in a case when the reliability information is unreliable and the gain value is 1 in a case when the reliability information is reliable, unnecessarily generating parallax is avoided by further multiplying the parallax amount by the gain value and reducing the parallax amount when the reliability information is unreliable.

The depth (parallax amount) of a pixel that is finally ascertained by the depth control unit 324 is output to the image generation unit 325. In the image generation unit 325, a left-right parallax image is geometrically generated based on the two-dimensional image output from the input image preprocessing unit 321 and the parallax amount input from the depth control unit 324 and the left-right parallax image is output to the output image post-processing unit 326.

Here, although three types of configuration examples of an image conversion unit have been described in Figs. 4 to 6, when generating the left-right parallax image, the output image is able to be selected from the three types of simultaneous generation of a left-right parallax image, only the left eye image, and only the right eye image.

[5. Processing of Component Amount Control Unit]

Next, the processes executed by the component amount control unit 315 set within the image conversion unit 310 according to the second embodiment illustrated in Fig. 5 will be described in detail.

Fig. 7 is a block diagram that illustrates a configuration of an embodiment of the component amount control unit 315. In the component amount control unit 315, the amplitude value of an input parallax emphasis component signal is controlled based on the depth information and the reliability information that are similarly input. Here, in the embodiment described below, the depth information and the reliability information thereof are input in a state of having one value for each parallax emphasis component pixel that corresponds to a pixel of the input image signal.

The depth information D of a pixel that is input to the component amount control unit 315 is input to a gain coefficient calculation unit 351 and output to a component amount adjust unit 353 by being converted into a gain coefficient $\beta$ of a value between 0 and 1 using a function f(x) set in the depth information D in advance for processing of a latter stage.

$$\beta = \mathtt{f(D)}$$

Similarly, the reliability information S of a pixel that is input to the component amount control unit 315 is input to a gain coefficient calculation unit 352 and output to a component amount adjust unit 353 by being converted into a gain coefficient $\gamma$ of a value between 0 and 1 using a function g(x) set in the reliability information S in advance for processing of a latter stage.

$$\gamma = \mathtt{g(S)}$$

The component amount adjustment unit 353 inputs a parallax emphasis component $\alpha$ of a pixel from the parallax emphasis component calculation unit 312, converts the parallax emphasis component $\alpha$ into a final parallax emphasis component $\alpha'$ by the below expression using the depth information gain coefficient $\beta$ and the reliability information gain coefficient $\gamma$.

$$\alpha' = \alpha \times \beta \times \gamma$$

Here, although the gain coefficient value is between 0 and 1 out of convenience, as long as the gain coefficient value follows unified rules, the gain coefficient value is not specified to such a range.

Further, the function f(x) and g(x) are able to use a variety of settings.

As examples of the functions f(x) and g(x), for example, linear functions as shown by the below expressions are used.

```
f(x)=A×x (where A is a constant)
```

```
g(x)=B×x (where B is a constant)
```

A and B are constants that are set in advance, and a variety of values are able to be set.

Further, conversion functions in the gain coefficient calculation unit are not limited to linear functions and non-linear conversions may be performed.

Further, as an example, there is a technique in which instead of using the gain value, in a case when the reliability of the depth information is low, the depth information thereof is not used, and using the depth information of the surroundings of the pixel, the value is calculated by method such as simply ascertaining the average value, ascertaining the correlations in the vertical, horizontal, and diagonal directions and ascertaining the average value by selecting only those with strong correlations, or the like, and the parallax emphasis component is adjusted by replacing the original depth value with the average value, or the like.

[6. Processing of Depth Control Unit]

Next, the processes executed by the depth control unit 324 that is set on the inside of the image conversion unit 320 according to the third embodiment described earlier with reference to Fig. 6 will be described in detail.

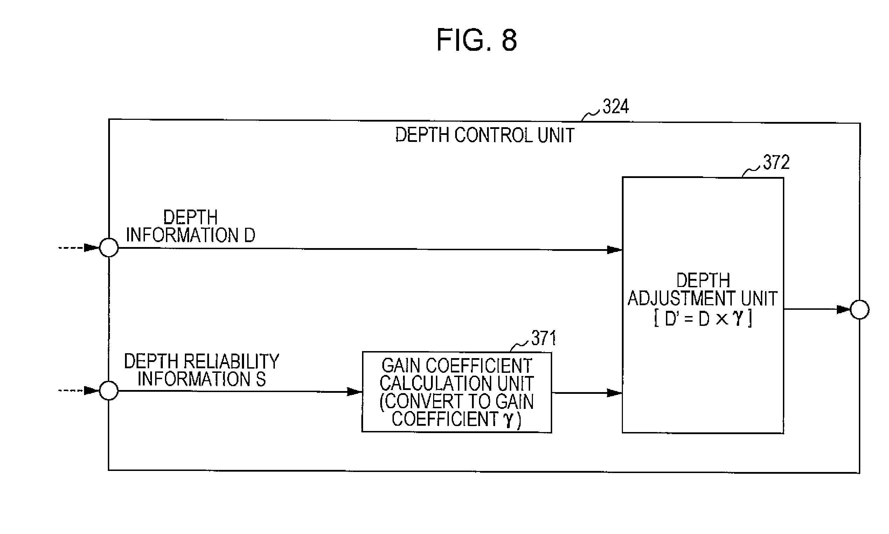

Fig. 8 is a block diagram that illustrates a configuration of an embodiment of the depth control unit 324. In the depth control unit 324, the amplitude value of the depth information that is input from the depth interpolation unit 322 is controlled based on the reliability information that is similarly input from the reliability interpolation unit 323.

Here, in the embodiment described below, description will be given with the depth information and the reliability information thereof being input in a state of having one value for each piece of data of the depth information.

The reliability information S of a pixel that is input to the depth control unit 324 is input to a gain coefficient calculation unit 371 and output to a depth adjustment unit 372 by being converted into a gain coefficient $\gamma$ of a value between 0 and 1 using a function g(x) set in the reliability information S in advance for processing of a latter stage.

$$\gamma = g(S)$$

The depth information D of a pixel that is input to the depth control unit 324 is converted into final depth information D' by the expression below and output using the reliability information gain coefficient $\gamma$.

$$D' = D \times \gamma$$

Here, although the gain coefficient value is between 0 and 1 out of convenience, as long as the gain coefficient value follows unified rules, the gain coefficient value is not specified to such a range.

Further, the function f(x) and g(x) are able to use a variety of settings.

As an example of the function g(x), for example, a linear function as shown by the below expression is used.

$$g(x)=B \times x \quad \text{(where B is a constant)}$$

B is a constant that is set in advance, and a variety of values are able to be set.

Further, conversion functions in the gain coefficient calculation unit are not limited to linear functions and non-linear conversions may be performed.

Further, as an example, there is a technique in which instead of using the gain value, in a case when the reliability of the depth information is low, the depth information thereof is not used, and using the depth information of the surroundings of the pixel, the value is calculated by a method such as simply ascertaining the average value, ascertaining the correlations in the vertical, horizontal, and diagonal directions and ascertaining the average value by selecting only those with strong correlations, or the like, and the parallax emphasis component is adjusted by replacing the original depth value with the average value, or the like.

[7. Processing of Parallax Image Generation Unit]

Next, the processes of the parallax image generation unit 316 within the image conversion unit 310 according to the second embodiment described with reference to Fig. 5 will be described.

The parallax image generation unit 316 performs a process of generating a left eye image (L image) and a right eye image (R image) by applying an original two-dimensional image that is the processing target and a spatial feature amount generated from the image, that is, the parallax emphasis component signal input from the component amount control unit 315.

Using the original two-dimensional image and the parallax emphasis component, in a case when, for example, the configuration described in Japanese Unexamined Patent Application Publication No. 2010-63083 described earlier is applied, the parallax image generation unit 316 performs a process of generating each of the image signals R and L of the R image and the L image signal as the left-right parallax image by the below expressions using the two-dimensional image signal (S) input from the input image preprocessing unit 311 and the parallax emphasis signal (E) input from the component amount control unit 315.

$$R=S-E$$

$$L=S+E$$

[8. Processing of Geometric Parallax Image Generation Unit]

Next, the processes of the geometric parallax image generation unit 325 configured on the inside of the image conversion unit 320 according to the third embodiment illustrated in Fig. 6 will be described.

The geometric parallax image generation unit 325 performs a process of generating a left eye image (L image) and a right eye image (R image) by a geometric operation using an original two-dimensional input image and the depth information that corresponds to the image.

The geometric parallax image generation unit 325 generates a left eye image (L image) and a right eye image (R image) by applying a method that uses the original two-dimensional input image and the depth information. However, the depth information that is applied is a value that is controlled according to the reliability.

[9. Processing Relating to Image Display Device]

The output of the image processing device according to the embodiments of the present disclosure illustrated in Figs. 1 and 2 is displayed on the display device 52 illustrated in Figs. 1 and 2. As display methods of a display device that executes the final image display, for example, there are the below types.

(1) Method of alternately outputting the left eye image and the right eye image in a time divisional manner

Such a method is an image output method that corresponds to an active glasses method of dividing an image that is observed by opening and closing liquid crystal shutters, for example, alternately between left and right in a time divisional manner alternately between the left and right eyes. (Method of switching the L and R images over time)

(2) Method of spatially separating and simultaneously outputting the left eye image and the right eye image

Such a method is an image output method that corresponds to a passive glasses method of separating the image that is observed for each of the left and right eyes by, for example, a polarization filter or a color filter.

For example, in a stereoscopic display device of such a spatial separation method, a polarization that is set such that the polarization direction is different for every horizontal line is bonded on the display front surface, and in a case when an image is seen through glasses of a polarization filter method that the user equips, an image that is separated for every horizontal line is observed by the left eye and the right eye. (Method of spatially switching the L and R images)

With regard to the image processing device 100 described in Figs. 1 and 2, a data generation processing example of outputting to a display device that executes an image display according to the various methods described above will be described.

First, a processing example of an image conversion unit in a case when the display method of the display device that finally executes an image display is a method of dividing the left eye image and the right eye image over time and alternately outputting the images will be described.

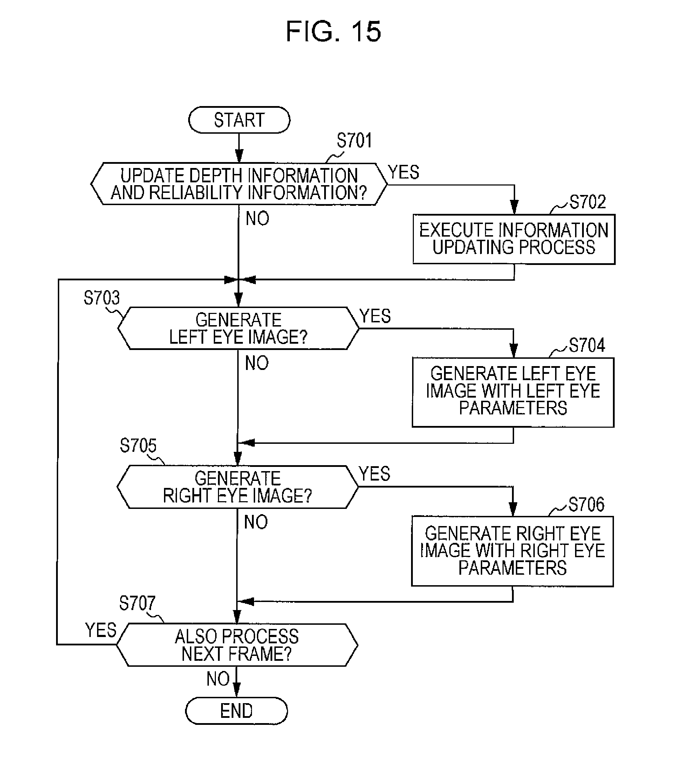

In the case of such a time divisional image display method, the image conversion unit switches, generates, and outputs the left eye image and the right eye image for each of the frames of the input image data (frames n, n+1, n+2, n+3...) . Here, a specific processing sequence will be described with reference to a flowchart (Fig. 15) at a latter stage.

The image conversion unit 104 outputs the left eye image and the right eye image by controlling to switch the conversion setting for every frame by respectively setting the odd-numbered frame and the even-numbered frames of the image data that is input to the left eye image and the right eye image (alternatively, the right eye image and the left eye image). The input image is output to the image display device 52 via the image output unit 105 illustrated in Figs. 1 and 2 by alternately outputting the left eye image and the right eye image in a time divisional manner.

With such a method, the image conversion unit 104 generates and outputs one image out of the right eye image and the left eye image corresponding to each frame.

Next, a processing example of the image conversion unit in a case when the display method of the display device that finally executes an image display is a method of spatially dividing and alternately outputting the left eye image and the right eye image will be described.

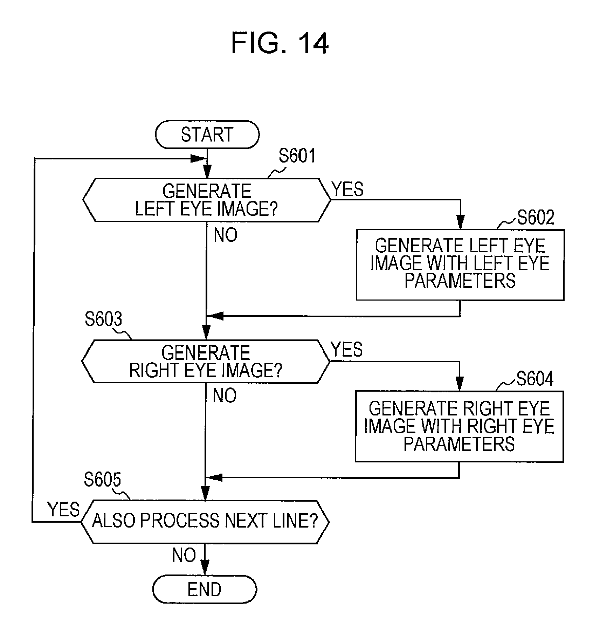

In the case of such a spatially divided image display method, the image conversion unit 104 switches, generates, and outputs the left eye image and the right eye image for each of the frames of the input image data (frames n, n+1, n+2, n+3...) . Here, a specific processing sequence will be described with reference to a flowchart (Fig. 14) at a latter stage.

The image conversion unit 104 outputs an image while controlling to switch the conversion setting for every line with the odd-numbered lines and the even-numbered lines of the image data that is input respectively as the left eye image and the right eye image (alternatively, the right eye image and the left eye image). The output image is output to the image display device 52 via the image output unit 105 by alternately outputting the left eye image and the right eye image in a time divisional manner.

With such a method, the image conversion unit 104 generates and outputs one image out of the right eye image and the left eye image corresponding to each line.

[10. Processing sequence of Image Conversion Unit]

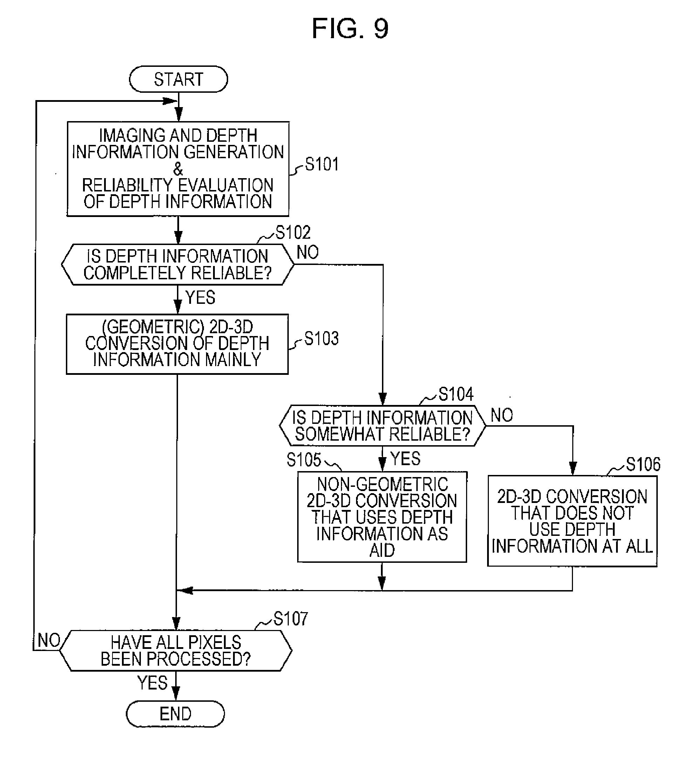

Next, the sequence of an image conversion process that is executed in an image processing device of an embodiment of the present disclosure will be described with reference to the flowcharts of Fig. 9 and others.

(10-1. Processing sequence to which the image conversion unit of the first embodiment illustrated in Fig. 4 is applied)

First, a processing sequence to which the image conversion unit of the first embodiment illustrated in Fig. 4 is applied will be described with reference to the flowcharts illustrated in Figs. 9 to 11.

An embodiment of a processing sequence to which the image conversion unit of the first embodiment illustrated in Fig. 4 will be described with reference to the flowchart illustrated in Fig. 9.

With the reliability information, a setting in units of one input two-dimensional image to be the processing target, a setting in units of regions (areas) such as units of pixels and units of blocks of the image, or the like are possible.

First, in step S101, imaging of an image is performed by the imaging device as normal. In a case when the depth information is generated during the imaging, the depth information is used, and in a case when the depth information is not generated during the imaging, the depth information is generated by estimation. The reliability information in units of an image or a region is generated for the input image by estimation. Here, in the present example, there are three values of the reliability information in which the depth information is

(a) completely reliable
(b) somewhat reliable
(c) neither (a) nor (b) = unreliable.

Here, the distinction between the above is able to be made by distinguishing the reliability information by a threshold value set in advance.

In a case when the depth information is completely reliable, the determination of step S102 is Yes, the flow proceeds to step S103, and a left-right parallax image is generated by performing a 2D-3D conversion process of mainly the depth information (geometric). Such a process corresponds to the process of the first 2D-3D conversion unit 202 of the image conversion unit 104 of Fig. 4.

In a case when the depth information is not reliable, the determinations of step S102 and step S104 are No, the flow proceeds to step S106, and a left-right parallax image is generated by performing a 2D-3D conversion process in which the depth information is not used at all. Such a process corresponds to the process of the third 2D-3D conversion unit 204 of the image conversion unit 104 of Fig. 4.

In a case when the depth information is only somewhat reliable, the determination of step S102 is No and the determination of step S104 is Yes, the flow proceeds to step S105, and a left-right parallax image is generated by performing a 2D-3D conversion process in which the depth information is used as an aid. Such a process corresponds to the process of the second 2D-3D conversion unit 203 of the image conversion unit 104 of Fig. 4.

Depending on the reliability of the depth information, after the 2D-3D conversion process of one of step S103, S105, and S106 is executed, the presence of unprocessed data is determined in step S107. In a case when there is unprocessed data, the processes of step S101 on are executed on the unprocessed data. In a case when it is determined in step S107 that the processing for all of the data has ended, the processing is ended.

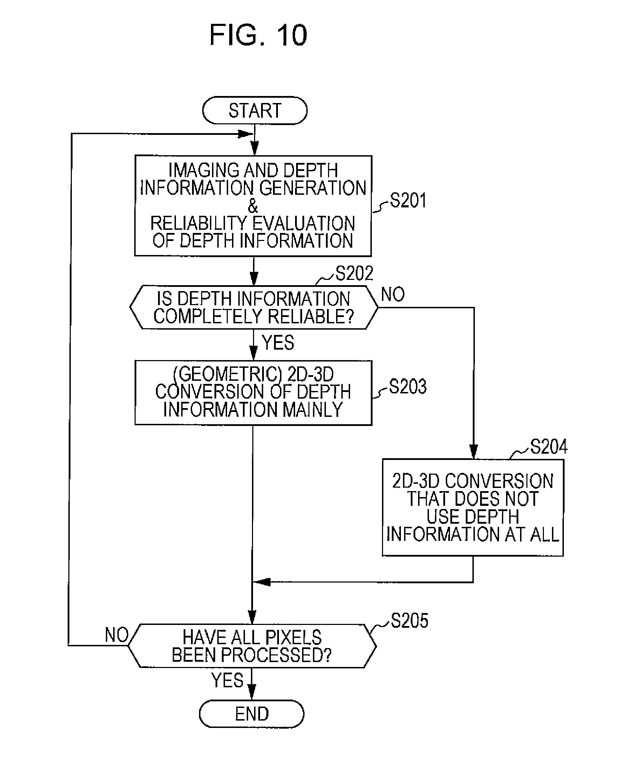

Fig. 10 is a flowchart that describes a processing sequence in a case when there are two values for the determination of the reliability information. That is, there are the two values of the reliability information in which the depth information is

(a) completely reliable
(b) not (a) = not completely reliable.

The processes that follow such a flow are processes that are suitable when, for example, it is often the case that the reliability of the depth information is high.

First, in step S201, imaging of an image is performed by the imaging device as normal. In a case when the depth information is generated during the imaging, the depth information is used, and in a case when the depth information is not generated during the imaging, the depth information is generated by estimation. The reliability information in units of an image or a region is generated for the input image by estimation. Here, in the present example, there are two values of the reliability information in which the depth information is

(a) completely reliable
(b) not (a) = not completely reliable.

Here, the distinction between the above is able to be made by distinguishing the reliability information by a threshold value set in advance.

In a case when the depth information is completely reliable, the determination of step S202 is Yes, the flow proceeds to step S203, and a left-right parallax image is generated by performing a 2D-3D conversion process of mainly the depth information (geometric). Such a process corresponds to the process of the first 2D-3D conversion unit 202 of the image conversion unit 104 of Fig. 4.

In a case when the depth information is not completely reliable, the determination of step S202 is No, the flow proceeds to step S204, and a left-right parallax image is generated by performing a 2D-3D conversion process that does not use the depth information at all. Such a process corresponds to the process of the third 2D-3D conversion unit 204 of the image conversion unit 104 of Fig. 4.

Depending on the reliability of the depth information, after the 2D-3D conversion process of whether step S203 or S204 is executed, the presence of unprocessed data is determined in step S205. In a case when there is unprocessed data, the processes of step S201 on are executed on the unprocessed data. In a case when it is determined in step S205 that the processing for all of the data has ended, the processing is ended.

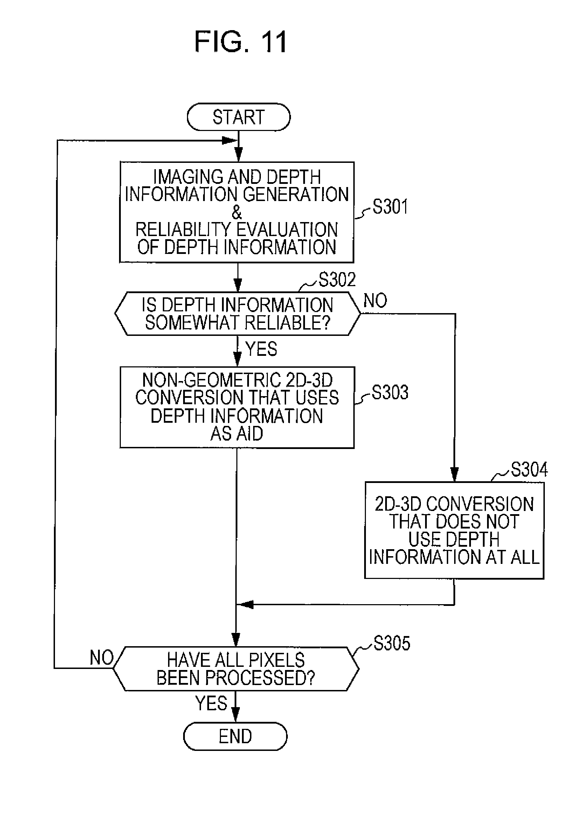

Similarly to Fig. 10, Fig. 11 is a flowchart that describes a processing sequence in a case when there are two values for the determination of the reliability information. In the present example, there are the two values of the reliability information in which the depth information is

(a) somewhat reliable
(b) not (a) = not somewhat reliable.

The processes that follow such a flow are processes that are suitable when, for example, it is often the case that the reliability of the depth information is low.

First, in step S301, imaging of an image is performed by the imaging device as normal. In a case when the depth information is generated during the imaging, the depth information is used, and in a case when the depth information is not generated during the imaging, the depth information is generated by estimation. The reliability information in units of an image or a region is generated for the input image by estimation. Here, in the present example, there are two values of the reliability information in which the depth information is

(a) somewhat reliable
(b) not (a) = not somewhat reliable.

Here, the distinction between the above is able to be made by distinguishing the reliability information by a threshold value set in advance.

In a case when the depth information is somewhat reliable, the determination of step S302 is Yes, the flow proceeds to step S303, and a left-right parallax image is generated by performing a non-geometric 2D-3D conversion process in which the depth information is used as an aid. Such a process corresponds to the process of the second 2D-3D conversion unit 203 of the image conversion unit 104 of Fig. 4.

In a case when the depth information is not somewhat reliable, the determination of step S302 is No, the flow proceeds to step S304, and a left-right parallax image is generated by performing a 2D-3D conversion process that does not use the depth information at all. Such a process corresponds to the process of the third 2D-3D conversion unit 204 of the image conversion unit 104 of Fig. 4.

Depending on the reliability of the depth information, after the 2D-3D conversion process of whether step S303 or S304 is executed, the presence of unprocessed data is determined in step S305. In a case when there is unprocessed data, the processes of step S301 on are executed on the unprocessed data. In a case when it is determined in step S305 that the processing for all of the data has ended, the processing is ended.

(10-2. Processing sequence to which the image conversion unit of the second embodiment illustrated in Fig. 5 is applied)

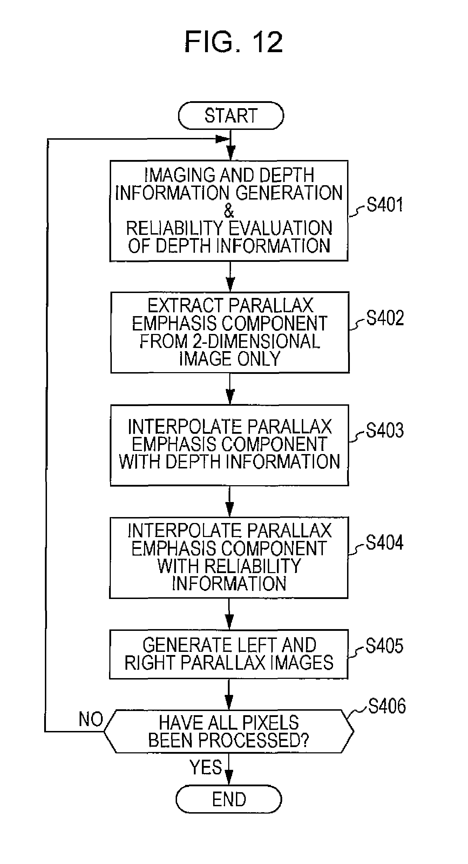

Next, a processing sequence in which the image conversion unit of the second embodiment illustrated in Fig. 5 is applied will be described with reference to the flowchart illustrated in Fig. 12.

An image conversion process that follows the flow illustrated in Fig. 12 corresponds to the process in a case when the image conversion unit 310 illustrated in Fig. 5 is applied. That is, the image conversion process that follows the flow illustrated in Fig. 12 does not switch the conversion method outright but is an example of a flowchart in a case when generating a three-dimensional image from only a two-dimensional image and in a case when adjusting the conversion parameters by applying the reliability information.

First, in step S401, imaging of an image is performed by the imaging device as normal. In a case when the depth information is generated during the imaging, the depth information is used, and in a case when the depth information is not generated during the imaging, the depth information is generated by estimation. The reliability information in units of an image or a region is generated for the input image by estimation.

In step S402, the parallax emphasis component is extracted from the spatial and frequency features of a two-dimensional image that is the imaging image. For example, in a case when the configuration described in Japanese Unexamined Patent Application Publication No. 2010-63083 described earlier is applied, the differential signal of the input image signal of the two-dimensional image that is the processing target is extracted as the parallax emphasis component.

In step S403, interpolation of the parallax emphasis component by the depth information is performed. Such a process corresponds, for example, to the process of the gain coefficient calculation unit 351 of the component amount control unit 315 described with reference to Fig. 7. The gain coefficient calculation unit 351 converts the depth information D into a gain coefficient $\beta$ of a value between 0 and 1 using the function f(x) set in advance and outputs the depth information D to the component amount adjustment unit 353.

$$\beta = f(D)$$

In step S403, interpolation of the parallax emphasis component based on the depth information is performed by, for example, such a process.

Next, in step S404, interpolation of the parallax emphasis component by the reliability information is performed. Such a process corresponds, for example, to the process of the gain coefficient calculation unit 352 of the component amount control unit 315 described with reference to Fig. 7. The gain coefficient calculation unit 352 converts the reliability information S into a gain coefficient $\gamma$ of a value between 0 and 1 using the function g(x) set in advance and outputs the reliability information S to the component amount adjustment unit 353.

$$\gamma = g(S)$$

In step S404, interpolation of the parallax emphasis component by the reliability of the depth information is performed, for example, by such a process.

In step S405, a left-right parallax image is generates from the two-dimensional image and the parallax emphasis component by applying the interpolated parallax emphasis component. Here, the parallax emphasis component $\alpha'$ that is finally applied is a value that is converted, for example, by the below expression.

$$\alpha' = \alpha \times \beta \times \gamma$$

The presence of unprocessed data is determined in step S406. In a case when there is unprocessed data, the processes of step S401 on are executed on the unprocessed data. In a case when it is determined in step S406 that the processing for all of the data has ended, the processing is ended.

(10-3. Processing sequence to which the image conversion unit of the third embodiment illustrated in Fig. 6 is applied)

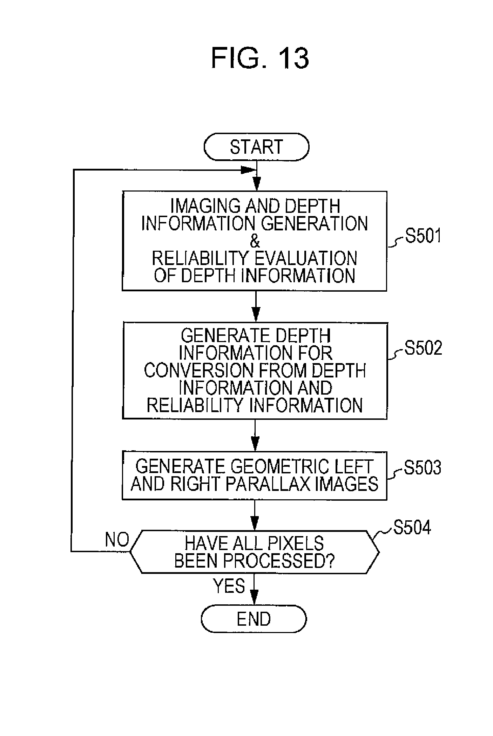

Next, a processing sequence to which the image conversion unit of the third embodiment illustrated in Fig. 6 is applied will be described with reference to the flowchart illustrated in Fig. 13.

An image conversion process that follows the flow illustrated in Fig. 13 corresponds to the process in a case when the image conversion unit 320 illustrated in Fig. 6 is applied. That is, the image conversion process that follows the flow illustrated in Fig. 13 does not switch the conversion method outright but is an example of a flowchart in a case when generating a three-dimensional image from only a two-dimensional image and in a case when adjusting the conversion parameters by applying the reliability information.

The reliability information is added to the depth information and thus the depth information with low reliability performs a process substituting with the average value of the surrounding depth information to generate the final depth information used to conversion. Thereafter, the geometric operation is performed from the final depth information and the two-dimensional image, and the left-right parallax image is generated.

First, in step S501, imaging of an image is performed by the imaging device as normal. In a case when the depth information is generated during the imaging, the depth information is used, and in a case when the depth information is not generated during the imaging, the depth information is generated by estimation. The reliability information in units of an image or a region is generated for the input image by estimation.

In step S502, the depth information for conversion is generated from the depth information and the reliability information. Such a process corresponds to the process of the depth control unit 324 of the image conversion unit 320 described earlier with reference to Fig. 6.

The depth control unit 324 increases and decreases the depth (parallax amount) with respect to the input depth information using the reliability information. As an example, supposing that the gain value is 0 in a case when the reliability information is unreliable and the gain value is 1 in a case when the reliability information is reliable, unnecessarily generating parallax is avoided by further multiplying the parallax amount by the gain value and reducing the parallax amount when the reliability information is unreliable.

In step S503, a left-right parallax image is generated by applying the depth information for conversion ascertained in step S502. Such a process corresponds to the geometric process of the geometric parallax image generation unit 325 described with reference to Fig. 7. In the parallax image generation unit 325, the left-right parallax image is geometrically generated based on the two-dimensional image output from the input image preprocessing unit 321 and the parallax amount input from the depth control unit 324 and the left-right parallax image is output to the output image post-processing unit 326.

The presence of unprocessed data is determined in step S504. In a case when there is unprocessed data, the processes of step S501 on are executed on the unprocessed data. In a case when it is determined in step S504 that the processing for all of the data has ended, the processing is ended.

[11. Processing Sequence of Image Conversion Unit (Moving Image)]

In a case when the processing target image is a moving image, the image processing device generates a moving image of a left eye image and a right eye image that corresponds to the display method of the display device.
As described earlier in the item [9. Processing Relating to Image Display Device], there are broadly the two types of display methods of moving images below.

(a) Spatial divisional method in which one of the configuration frames of the moving image is divided into a left eye image and a right eye image in, for example, units of lines
(b) Time divisional method in which the moving image is divided into a left eye image and a right eye image in units of frames

The image processing device generates an output image according to such display methods.
The processes corresponding to such methods with respect to the moving image will be described below with reference to the flowcharts illustrated in Figs. 14 and 15.

(11-1. Processing example in a case when the display device uses the spatial divisional method)

First, a processing example in a case when the display device uses the spatial divisional method will be described with reference to the flowchart illustrated in Fig. 14.
The flowchart illustrated in Fig. 14 shows a process in a case when the left eye image and the right eye image are generated in units of lines in the image processing of one frame that configures the moving image. The left eye image and the right eye image are generated alternately by lines to suit the display device. Here, the generation process of the left eye image and the right eye image of each line performs the image generation following the process described earlier in the item [10. Processing Sequence of Image Conversion Unit].
In step S601 of the flow illustrated in Fig. 14, it is determined whether or not a line is a line that generates the left eye image in units of the lines of the processing image. Here, the determination is made according to information set in advance such as, for example, odd lines and for the left eye, even lines are for the right eye.
Specifically, for example, it is possible to make a determination by the display method of the image display device by which the image processing unit outputs and according to the value of a line counter that is provided within the image conversion unit. The line counter is a counter that retains the values that correspond to the line numbers of the input image.
In a case when the output method of the image display device is, for example, the spatial divisional output method, the image conversion unit determines whether or not to output the left eye image according to the value of the line counter. That is, the image conversion unit performs control such that the left eye image is output for only either odd-numbered lines or even-numbered lines. In a case when it is determined that the left eye image is to be output according to the value of the line counter, the flow proceeds to the left eye image generating. On the other hand, in a case when it is determined from the value of the line counter that a line is not a line for the left eye image output, the flow proceeds to the next conditional branching.
In a case when the line is a left eye image generation line, the flow proceeds to step S602 and the generation process of the left eye image is executed based on the input two-dimensional image. Such a process is executed as a process to which the generation parameters of the left eye image are applied in the image generation according to the process described earlier in [10. Processing Sequence of Image Conversion Unit].
When it is determined in step S601 that a line is not a left eye image generation line, the flow proceeds to step S603 and it is determined whether or not the line is a right eye generation line. In a case when the line is a right eye image generation line, the flow proceeds to step S604 and a generation process of the right eye image is executed based on the input two-dimensional image. Such a process is executed as a process to which the generation parameters of the right eye image are applied in the image generation according to the process described earlier in [10. Processing Sequence of Image Conversion Unit].
In step S605, the presence of unprocessed lines is determined, and in a case when there are unprocessed lines, the flow returns to step S601 and processing of the unprocessed lines is executed.
The processing is ended if it is determined in step S605 that there are no unprocessed lines.

(11-2. Processing example in a case when the display device uses the time divisional method)

Next, a processing example in a case when the display device uses the time divisional method will be described with reference to the flowchart illustrated in Fig. 15.

The flowchart illustrated in Fig. 15 is a process in a case when the left eye image and the right eye image are generated in units of frames in the image processing of one frame that configures the moving image. The left eye image and the right eye image are generated alternately by frames to suit the display device. Here, the generation process of the left eye image and the right eye image of each frame performs the image generation following the process described earlier in the item [10. Processing Sequence of Image Conversion Unit].

In step S701 of the flow illustrated in Fig. 15, it is determined whether an updating process of the depth information and the reliability information is important. Such a determination is a process of determining whether an updating process of the depth information and the reliability is important due to changes in the frames. The updating of the depth information and the reliability information is performed according to information set in advance such as, for example, units of one frame, units of two frames, or units of four frames. In a case when an update is performed, the determination at the conditional branching of step S701 is Yes, the updating process is executed in step S702, and the flow proceeds to step S703. In a case when an update is not important, the flow proceeds to step S703 without executing the updating process of step S702.

It is determined in step S703 whether or not a frame is a frame that generates the left eye image in units of frames of the processing image. Such a determination process is determined according to information set in advance.

Specifically, for example, it is possible to make a determination by the display method of the image display device by which the image processing unit outputs and according to the value of a frame counter that is provided within the image conversion unit. The frame counter is a counter that retains the values that correspond to the frame numbers of the input image.

In a case when the output method of the image display device is, for example, the time divisional output method described above, the image conversion unit determines whether or not to output the left eye image according to the value of the frame counter. That is, the image conversion unit performs control such that the left eye image is output for only either odd-numbered lines or even-numbered lines. In a case when it is determined that the left eye image is to be output according to the value of the frame counter, the flow proceeds to the left eye image generating. On the other hand, in a case when it is determined from the value of the frame counter that a frame is not a frame for the left eye image output, the flow proceeds to the next conditional branching.

In a case when the frame is a left eye image generation frame, the flow proceeds to step S704 and the generation process of the left eye image is executed based on the input two-dimensional image. Such a process is executed as a process to which the generation parameters of the left eye image are applied in the image generation according to the process described earlier in [10. Processing Sequence of Image Conversion Unit].

When it is determined in step S703 that a frame is not a left eye image generation frame, the flow proceeds to step S705 and it is determined whether or not the frame is a right eye generation frame. In a case when the frame is a right eye image generation frame, the flow proceeds to step S706 and a generation process of the right eye image is executed based on the input two-dimensional image. Such a process is executed as a process to which the generation parameters of the right eye image are applied in the image generation according to the process described earlier in [10. Processing Sequence of Image Conversion Unit].

In step S707, the presence of unprocessed frames is determined, and in a case when there are unprocessed frames, the flow returns to step S701 and processing of the unprocessed lines is executed.

The processing is ended if it is determined in step S707 that there are no unprocessed frames.

[12. Other Embodiments]

The embodiments described above are, for example, as illustrated in Figs. 1 and 2, configuration examples of inputting the imaged image of an imaging device and outputting the generated image to a display device.

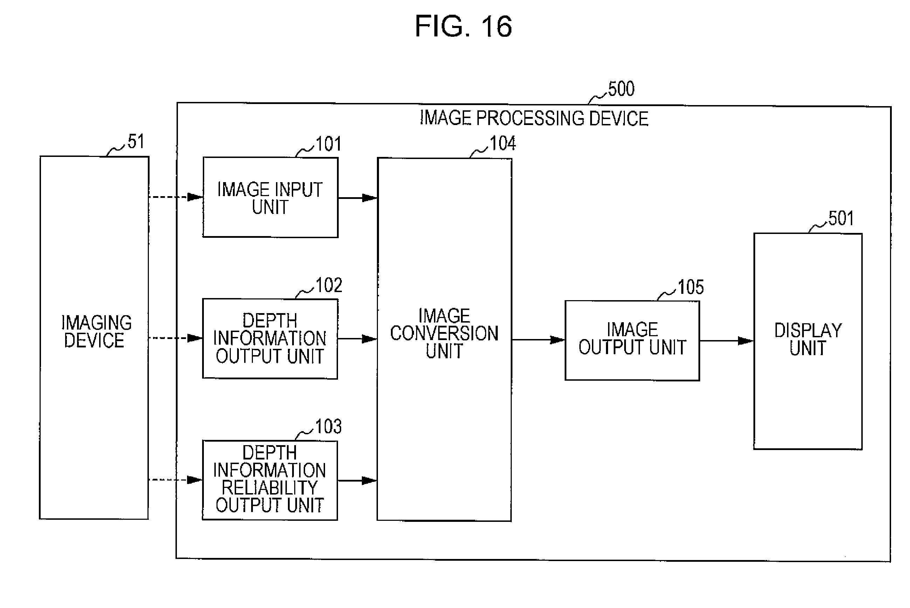

However, the image processing device of the embodiment of the present disclosure may have, for example, as illustrated in Fig. 16, a configuration with a display unit 501 on the inside of an image processing device 500.

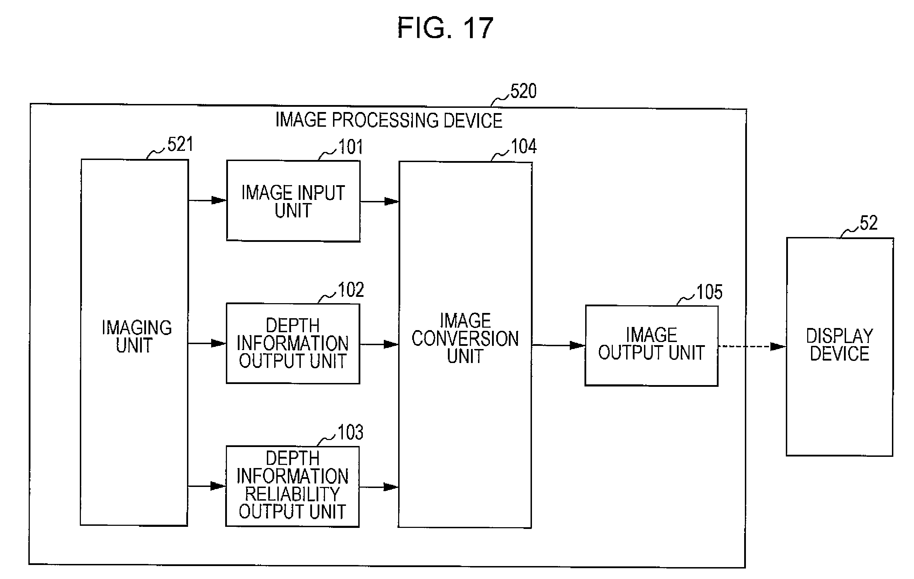

Further, as illustrated in Fig. 17, the image processing device of the embodiment of the present disclosure may be, for example, a camera that includes an imaging unit 521 on the inside of an image processing device 520.

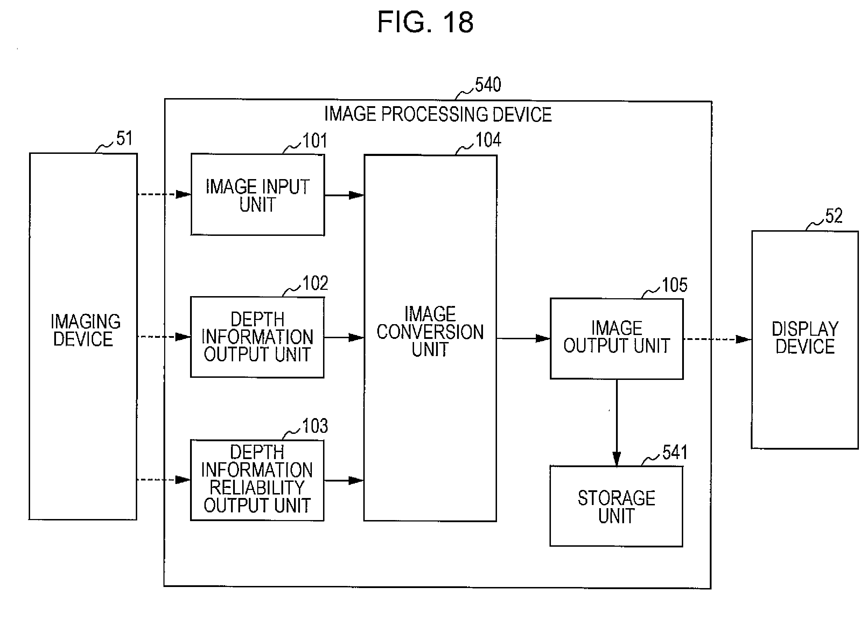

Furthermore, as illustrated in Fig. 18, the image processing device of the embodiment may have a configuration of including a storage unit 541 that records image data that is generated inside an image processing device 540. The storage unit 541 is able to be configured by, for example, a flash memory, a hard disk, a DVD, a Blu-ray disc (BD), or the like.

The embodiments of the present disclosure have been detailed above with reference to specific embodiments. However, it is self-evident that corrections and substitutions may be made by those skilled in the art within a scope without departing from the gist of the present disclosure. That is, the embodiments of the present disclosure have been disclosed as examples, and are not to be interpreted as limiting. The scope of the claims is to be consulted to determine the gist of the present disclosure.

Further, the series of processes described in the specification is able to be executed by hardware, software, or a combination of both. In a case when then the processes are executed by software, it is possible to execute a program on which the processing sequence is recorded by installing the program on a memory within a computer that is integrated into specialized hardware, or to execute a program by installing the program on a general-purpose computer that is able to execute various processes. For example, the program may be recorded on a recording medium in advance. Other than installing a program on a computer from a recording medium, a program is able to be installed on a recording medium such as a hard disk that receives and contains the program via a network such as LAN (Local Area Network) or the Internet.

Here, the various processes described in the specification are not limited to being executed in time series according to the description, and may be executed in parallel or individually according to the processing ability of the device that executes the processes or as necessary. Further, a system in the specification is a logical collection configuration of a plurality of devices, and the devices of each configuration are not necessarily within the same housing.

The present disclosure contains subject matter related to that disclosed in Japanese Priority Patent Application JP 2010-290194 filed in the Japan Patent Office on December 27, 2010, the entire contents of which are hereby incorporated by reference.

It should be understood by those skilled in the art that various modifications, combinations, sub-combinations and alterations may occur depending on design requirements and other factors insofar as they are within the scope of the appended claims or the equivalents thereof.

**Claims**

1. An image processing device comprising:

   an image input unit that inputs a two-dimensional image signal;
   a depth information output unit that inputs or generates depth information in units of an image region that configures the two-dimensional image signal;
   a depth information reliability output unit that inputs or generates reliability of depth information that the depth information output unit outputs;
   an image conversion unit that inputs an image signal that is output from the image input unit, depth information that the depth information output unit outputs, and depth information reliability that the depth information reliability output unit outputs, and generates and outputs a left eye image and a right eye image for realizing binocular stereoscopic vision; and
   an image output unit that outputs a left eye image and a right eye image that are output from the image conversion unit,
   wherein the image conversion unit has a configuration of performing image generation of at least one of a left eye image and a right eye image by an image conversion process on an input image signal, and
   executes a conversion process in which the depth information and the depth information reliability are applied as conversion control data during the image conversion.

2. The image processing device according to Claim 1,
   wherein the image conversion unit executes, in a case when the depth information reliability is equal to or greater than a threshold value fixed in advance and it is determined that reliability is high, a process of generating a left eye image or a right eye image from a two-dimensional image by an image conversion process on which the depth information has been mainly applied.

3. The image processing device according to Claim 1 or 2,
   wherein the image conversion unit executes, in a case when the depth information reliability is less than a threshold value fixed in advance and it is determined that reliability is low, a process of generating a left eye image or a right eye image from a two-dimensional image by an image conversion process that does not use the depth information.

4. The image processing device according to anyone of Claims 1 to 3,
   wherein the image conversion unit performs a process of setting a brightness differential signal with respect to an input image signal as a feature amount, generating a signal in which the feature amount is added to an input image signal and a signal in which the feature amount is subtracted from an input image signal, and generating a pair of the two signals as a pair of a left eye image and a right eye image.

**5.** The image processing device according to anyone of Claims 1 to 4, wherein the image conversion unit executes, in a case when the depth information reliability is less than a first threshold value and equal to or greater than a second threshold value fixed in advance and it is determined that the reliability is medium, a process of generating a left eye image or a right eye image from an input two-dimensional image by a non-geometric image conversion process on which the depth information is used as an aid.

**6.** The image processing device according to anyone of Claims 1 to 5, wherein the image conversion unit includes:

a parallax emphasis component calculation unit that extracts a spatial feature amount of an input image signal and calculates a parallax emphasis component to which an extracted feature amount is applied;
a component amount control unit that executes an adjustment of the parallax emphasis component based on the depth information and the depth information reliability; and
a parallax image generation unit that executes a process of generating a left eye image or a right eye image from an input two-dimensional image by an image conversion process on an input image to which a parallax emphasis component for which a component amount that is an output of the component amount control unit is adjusted is applied.

**7.** The image processing device according to anyone of Claims 1 to 6, wherein the image conversion unit includes:

a depth control unit that executes weighting of the depth information based on the depth information reliability and generates weighting set depth information; and
a parallax image generation unit that executes a process of generating a left eye image or a right eye image from an input two-dimensional image by an image conversion process on an input image to which weighting set depth information that is an output of the depth control unit is applied.

**8.** The image processing device according to anyone of Claims 1 to 7, wherein the image processing device further includes a display unit that displays a converted image that is generated by the image conversion unit.

**9.** The image processing device according to anyone of Claims 1 to 8, wherein the image processing device further includes an imaging unit, and the image conversion unit executes a process by inputting an imaged image of the imaging unit.

**10.** The image processing device according to anyone of Claims 1 to 9, wherein the image processing device further includes a storage unit that records a converted image that is generated by the image conversion unit.

**11.** An image processing method that executes an image conversion process in an image processing device, the image processing method comprising:

image inputting by an image input unit inputting a two-dimensional image signal;
depth information outputting by a depth information output unit inputting or generating depth information in units of an image region that configures the two-dimensional image signal;
depth information reliability outputting by a depth information reliability output unit inputting or generating reliability of depth information that the depth information output unit outputs;
image converting by an image conversion unit inputting an image signal that is output from the image input unit, depth information that the depth information output unit outputs, and depth information reliability that the depth information reliability output unit outputs, and generating and outputting a left eye image and a right eye image for realizing binocular stereoscopic vision; and
image outputting by an image output unit outputting a left eye image and a right eye image that are output from the image conversion unit,
wherein the image converting performs image generation of at least one of a left eye image and a right eye image by an image conversion process on an input image signal and executes a conversion process in which the depth information and the depth information reliability are applied as conversion control data during the image conversion.

**12.** A program causing an image processing device to execute an image conversion process comprising:

image inputting by an image input unit inputting a two-dimensional image signal;

depth information outputting by a depth information output unit inputting or generating depth information in units of an image region that configures the two-dimensional image signal;

depth information reliability outputting by a depth information reliability output unit inputting or generating reliability of depth information that the depth information output unit outputs;

image converting by an image conversion unit inputting an image signal that is output from the image input unit, depth information that the depth information output unit outputs, and depth information reliability that the depth information reliability output unit outputs, and generating and outputting a left eye image and a right eye image for realizing binocular stereoscopic vision; and

image outputting by an image output unit outputting a left eye image and a right eye image that are output from the image conversion unit,

wherein in the image converting, an image generation of at least one of a left eye image and a right eye image by an image conversion process on an input image signal is caused to be performed and a conversion process in which the depth information and the depth information reliability are applied as conversion control data is caused to be executed during the image conversion.

# FIG. 1

IMAGE PROCESSING DEVICE ~100

IMAGING DEVICE ~51

IMAGE INPUT UNIT ~101

DEPTH INFORMATION OUTPUT UNIT ~102

DEPTH INFORMATION RELIABILITY OUTPUT UNIT ~103

IMAGE CONVERSION UNIT ~104

IMAGE OUTPUT UNIT ~105

DISPLAY DEVICE ~52

EP 2 469 870 A2

# FIG. 2

EP 2 469 870 A2

# FIG. 3

PIXEL UNDER
SCRUTINY

## FIG. 4

IMAGE CONVERSION UNIT ~104

IMAGE SIGNAL → INPUT IMAGE PREPROCESSING UNIT (~201)

FIRST 2D-3D CONVERSION UNIT (EXECUTE GEOMETRIC CONVERSION OF DEPTH INFORMATION MAINLY) (~202)

SECOND 2D-3D CONVERSION UNIT (EXECUTE NON-GEOMETRIC CONVERSION THAT USES DEPTH INFORMATION AS AID) (~203)

THIRD 2D-3D CONVERSION UNIT (EXECUTE CONVERSION THAT DOES NOT USE DEPTH INFORMATION) (~204)

IMAGE SELECTION UNIT (OR SYNTHESIS UNIT) (~205)

OUTPUT IMAGE POST-PROCESSING UNIT (~206)

DEPTH INFORMATION

DEPTH RELIABILITY INFORMATION

EP 2 469 870 A2

## FIG. 5

IMAGE CONVERSION UNIT — 310

IMAGE SIGNAL → INPUT IMAGE PREPROCESSING UNIT (311)

PARALLAX EMPHASIS COMPONENT CALCULATION UNIT (312)

COMPONENT AMOUNT CONTROL UNIT (WEIGHTING BY RELIABILITY) (315)

PARALLAX IMAGE GENERATION UNIT (316)

OUTPUT IMAGE POST-PROCESSING UNIT (317)

DEPTH INFORMATION → DEPTH INTERPOLATION UNIT (313)

DEPTH RELIABILITY INFORMATION → RELIABILITY INTERPOLATION UNIT (314)

EP 2 469 870 A2

# FIG. 6

IMAGE CONVERSION UNIT 320

IMAGE SIGNAL → INPUT IMAGE PREPROCESSING UNIT 321

DEPTH INFORMATION → DEPTH INTERPOLATION UNIT 322

DEPTH RELIABILITY INFORMATION → RELIABILITY INTERPOLATION UNIT 323

DEPTH CONTROL UNIT (WEIGHTING BY RELIABILITY) 324

GEOMETRIC PARALLAX IMAGE GENERATION UNIT 325

OUTPUT IMAGE POST-PROCESSING UNIT 326

EP 2 469 870 A2

# FIG. 7

COMPONENT AMOUNT CONTROL UNIT ~315

PARALLEL EMPHASIS COMPONENT α

DEPTH INFORMATION D → GAIN COEFFICIENT CALCULATION UNIT (CONVERT TO GAIN COEFFICIENT β) ~351

DEPTH RELIABILITY INFORMATION S → GAIN COEFFICIENT CALCULATION UNIT (CONVERT TO GAIN COEFFICIENT γ) ~352

COMPONENT AMOUNT ADJUSTMENT UNIT $[\alpha' = \alpha \times \beta \times \gamma]$ ~353

## FIG. 8

DEPTH CONTROL UNIT ～324

DEPTH
INFORMATION D

DEPTH RELIABILITY
INFORMATION S

GAIN COEFFICIENT
CALCULATION UNIT
(CONVERT TO GAIN
COEFFICIENT γ) ～371

DEPTH
ADJUSTMENT UNIT
[ D' = D × γ ] ～372

EP 2 469 870 A2

# FIG. 9

START

IMAGING AND DEPTH
INFORMATION GENERATION
&
RELIABILITY EVALUATION
OF DEPTH INFORMATION ⟋S101

IS DEPTH INFORMATION
COMPLETELY RELIABLE? ⟍S102  NO

YES

(GEOMETRIC) 2D-3D
CONVERSION OF DEPTH
INFORMATION MAINLY ⟋S103

IS DEPTH INFORMATION
SOMEWHAT RELIABLE? ⟍S104  NO

S105⟍  YES

NON-GEOMETRIC
2D-3D CONVERSION
THAT USES DEPTH
INFORMATION AS
AID

2D-3D CONVERSION
THAT DOES NOT
USE DEPTH
INFORMATION AT ALL ⟋S106

NO⟍  HAVE ALL PIXELS
BEEN PROCESSED? ⟋S107

YES

END

# FIG. 10

START

IMAGING AND DEPTH
INFORMATION GENERATION
&
RELIABILITY EVALUATION
OF DEPTH INFORMATION        ⌒S201

IS DEPTH INFORMATION        ⌒S202
COMPLETELY RELIABLE?        NO

↓YES

(GEOMETRIC) 2D-3D
CONVERSION OF DEPTH         ⌒S203
INFORMATION MAINLY

2D-3D CONVERSION            ⌒S204
THAT DOES NOT
USE DEPTH
INFORMATION AT ALL

NO    HAVE ALL PIXELS       ⌒S205
BEEN PROCESSED?

YES↓

END

# FIG. 11

START

IMAGING AND DEPTH
INFORMATION GENERATION
&
RELIABILITY EVALUATION
OF DEPTH INFORMATION — S301

IS DEPTH INFORMATION — S302
SOMEWHAT RELIABLE? — NO

YES

NON-GEOMETRIC 2D-3D
CONVERSION THAT USES
DEPTH INFORMATION
AS AID — S303

2D-3D CONVERSION — S304
THAT DOES NOT
USE DEPTH
INFORMATION AT ALL

NO — HAVE ALL PIXELS — S305
BEEN PROCESSED?

YES

END

# FIG. 12

```
                    ┌──────────┐
                    │  START   │
                    └────┬─────┘
                         │
  ┌───────────▶ ┌────────▼─────────────┐
  │             │  IMAGING AND DEPTH   │
  │             │INFORMATION GENERATION│  ⌐S401
  │             │          &           │
  │             │  RELIABILITY EVALUATION│
  │             │  OF DEPTH INFORMATION│
  │             └────────┬─────────────┘
  │                      │
  │             ┌────────▼─────────────┐
  │             │  EXTRACT PARALLAX    │
  │             │  EMPHASIS COMPONENT  │  ⌐S402
  │             │  FROM 2-DIMENSIONAL  │
  │             │     IMAGE ONLY       │
  │             └────────┬─────────────┘
  │                      │
  │             ┌────────▼─────────────┐
  │             │ INTERPOLATE PARALLAX │  ⌐S403
  │             │  EMPHASIS COMPONENT  │
  │             │ WITH DEPTH INFORMATION│
  │             └────────┬─────────────┘
  │                      │
  │             ┌────────▼─────────────┐
  │             │ INTERPOLATE PARALLAX │
  │             │  EMPHASIS COMPONENT  │  ⌐S404
  │             │   WITH RELIABILITY   │
  │             │     INFORMATION      │
  │             └────────┬─────────────┘
  │                      │
  │             ┌────────▼─────────────┐
  │             │  GENERATE LEFT AND   │  ⌐S405
  │             │ RIGHT PARALLAX IMAGES│
  │             └────────┬─────────────┘
  │                      │
  │  NO  ╱───────────────▼──────────────╲  ⌐S406
  └─────┤        HAVE ALL PIXELS         │
        ╲       BEEN PROCESSED?          ╱
         ╲─────────────┬────────────────╱
                  YES  │
                    ┌──▼───────┐
                    │   END    │
                    └──────────┘
```

# FIG. 13

START

IMAGING AND DEPTH INFORMATION GENERATION & RELIABILITY EVALUATION OF DEPTH INFORMATION — S501

GENERATE DEPTH INFORMATION FOR CONVERSION FROM DEPTH INFORMATION AND RELIABILITY INFORMATION — S502

GENERATE GEOMETRIC LEFT AND RIGHT PARALLAX IMAGES — S503

HAVE ALL PIXELS BEEN PROCESSED? — S504

NO

YES

END

# FIG. 14

```
                    ┌─────────┐
                    │  START  │
                    └────┬────┘
                         │              S601
          ┌──────────────▼──────────────┐  YES
          │         GENERATE            ├──────────────┐
          │      LEFT EYE IMAGE?        │              │
          └──────────────┬──────────────┘              │
                         │ NO                          ▼         S602
                         │              ┌───────────────────────┐
                         │              │  GENERATE LEFT EYE     │
                         │              │  IMAGE WITH LEFT EYE   │
                         │              │     PARAMETERS         │
                         │              └───────────┬───────────┘
           S603          │                          │
          ┌──────────────▼──────────────┐  YES      │
          │         GENERATE            ├──────┐    │
          │      RIGHT EYE IMAGE?       │      │ ◄──┘
          └──────────────┬──────────────┘      │
                         │ NO                   ▼        S604
                         │       ┌───────────────────────┐
                         │       │  GENERATE RIGHT EYE    │
                         │       │  IMAGE WITH RIGHT EYE  │
                         │       │     PARAMETERS         │
                         │       └───────────┬───────────┘
           S605          │                   │
    YES  ┌──────────────▼──────────────┐ ◄──┘
    ◄────┤  ALSO PROCESS NEXT LINE?    │
         └──────────────┬──────────────┘
                        │ NO
                   ┌────▼────┐
                   │   END   │
                   └─────────┘
```

# FIG. 15

```
                    ( START )
                        │
                        ▼                               S701
        ┌──────────────────────────────────┐  YES
        < UPDATE DEPTH INFORMATION          >─────────────┐
        < AND RELIABILITY INFORMATION?      >             │
        └──────────────────────────────────┘             ▼         S702
                       │ NO                     ┌──────────────────────┐
                       │                        │ EXECUTE INFORMATION  │
                       │                        │ UPDATING PROCESS     │
                       │                        └──────────────────────┘
                       │                                  │
          S703         ▼◄─────────────────────────────────┘
        ┌──────────────────────────────────┐  YES
        <         GENERATE                  >─────────────┐
        <      LEFT EYE IMAGE?              >             │
        └──────────────────────────────────┘             ▼         S704
                       │ NO                     ┌──────────────────────┐
                       │                        │ GENERATE LEFT EYE    │
                       │                        │ IMAGE WITH LEFT EYE  │
                       │                        │ PARAMETERS           │
                       │                        └──────────────────────┘
          S705         ▼◄─────────────────────────────────┘
        ┌──────────────────────────────────┐  YES
        <         GENERATE                  >─────────────┐
        <      RIGHT EYE IMAGE?             >             │
        └──────────────────────────────────┘             ▼         S706
                       │ NO                     ┌──────────────────────┐
                       │                        │ GENERATE RIGHT EYE   │
                       │                        │ IMAGE WITH RIGHT EYE │
                       │                        │ PARAMETERS           │
                       │                        └──────────────────────┘
          S707         ▼◄─────────────────────────────────┘
    YES ┌──────────────────────────────────┐
  ┌─────<        ALSO PROCESS              >
  │     <       NEXT FRAME?                >
  │     └──────────────────────────────────┘
  │                    │ NO
  │                    ▼
  │                 ( END )
  │
  └──────── (back to S703)
```

# FIG. 16

# FIG. 17

EP 2 469 870 A2

# FIG. 18

EP 2 469 870 A2

# EP 2 469 870 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 9107562 A
- JP 2000261828 A
- JP 9161074 A
- JP 8331607 A
- JP 8030806 A
- JP 10051812 A
- JP 2005151534 A
- JP 2010063083 A
- JP 2009296272 A
- JP 2010290194 A

### Non-patent literature cited in the description

- *IEEE Transactions on Pattern Analysis and Machine Intelligence (PAMI,* 2008